# EUROPEAN PATENT APPLICATION

(11) **EP 1 595 604 A1**
(43) Date of publication of application: **16.11.2005**
(21) Application number: 05011522.9
(22) Date of filing: 28.02.2003
(51) Int. Cl.: B05D 7/00, B29C 63/02, B05D 3/10, B05D 7/14

(54) **Automobile body-coating method (Div 1)**

(30) Priority: 28.02.2002 JP 2002054515; 28.02.2002 JP 2002054516; 28.02.2002 JP 2002054517; 28.02.2002 JP 2002054518; 28.02.2002 JP 2002054519; 28.02.2002 JP 2002054520
(62) Divisional of application: 03251241.0
(71) Applicant: Kansai Paint Co., Ltd, Amagasaki-shi, Hyogo-ken 661-0964 (JP)
(72) Inventor: Nakamura, Shigeru, Hiratsuka-shi Kanagawa-ken 254-0016 (JP); Sugai, Hideo, Hiratsuka-shi Kanagawa-ken 254-0016 (JP)
(74) Representative: Stuart, Ian Alexander

(57) **Abstract**

A method for coating a plate area of an automobile body comprising an oxidized aluminum material (optionally in combination with a steel material) comprises (1) electrodeposition coating a heat-curable electrodeposition coating composition onto the surface of the oxidized aluminum material to form an electrodeposition coating film followed by heat curing (optionally the steel material being subjected to a surface treatment followed by being subjected to an electrodeposition coating); or (2) coating a heat-curable water based intercoat coating composition or a heat-curable intercoat powder coating composition onto the plate area to form a water based intercoat coating film or an intercoat powder coating film respectively, followed by coating a curable topcoat coating composition to form a curable topcoat coating film, and heat curing both coating films independently from each other or simultaneously. Optionally the steel material is subjected to an electrodeposition coating.

## Description

### Background Art:

### (1) Field of the Invention:

The present invention relates to a coating method of an automobile body partly or wholly consisting of an aluminum material or an oxidized aluminum material, which method is capable of forming a coating film showing good coating film finished appearance in definition properties, smoothness and the like, and good coating film performances in corrosion resistance, fabrication properties and the like.

The present invention also relates to an automobile body-coating method comprising applying a film facing material onto the surface of an aluminum material or an aluminum-material-coated steel material in an outer plate area and/or an inner plate area of an automobile body comprising an aluminum material, an aluminum material-coated steel material or an aluminum material and steel material-combined metal material, and capable of forming a coating film showing good coating film finished appearance in definition properties, smoothness and the like, and good coating film performances in corrosion resistance, fabrication properties and the like.

### (2) Description of Background Art :

An automobile body-coating method comprising subjecting an automobile body consisting of a steel material to a chemical treatment, followed by a primer coating, and a topcoat coating, is well known in the art.

Recently, in the field of the automobile, on one hand, an automobile body weight is increased due to improvements in collision safety performances and increase in standard trims, and on the other hand, remarkable improvements in fuel cost are demanded from the standpoint of global environment problems. As an approach to satisfy the above demand, an attempt to replace a part or all of the automobile body comprising a steel material with an aluminum material has been proposed so as to decrease a total weight of the automobile body. However, application of the conventional coating method to an automobile body part comprising the aluminum material makes it impossible to form a coating film showing good finished appearance and good coating film performances.

The present inventors made intensive studies to find out that a coating film formed by a coating method comprising specified steps can solve the above problems, resulting in completing the present invention.

A use of an aluminum material in a part of the automobile body, for example, hood, roof, bonnet and the like, may produce such problems that vibration may produce noises while the automobile is running.

In the art, a crosslinkable resin coating composition such as a melamine-curing resin coating composition, isocyanate-curing resin coating composition, oxidation-curing resin coating composition and the like is coated directly onto an interior part or exterior part of the automobile. However, the direct coating onto the automobile body produces such problems that a selection of an optimum coating method is troublesome, that a uniform coating film thickness is difficult to obtain, that coating drawbacks due to coating, for example, cissing, spitting, foreign particles and the like, may develop, that the coating composition necessary for coating may be consumed in an excess amount, that safe performances of a working environment for coating and controls of safety and health are difficult, that difficulties of recovering used coating films are undesirable from the standpoint of environmental pollution, that use of the spray coating as usual is unable to provide a wide application in appearance, that finishing is planar and short of steric feeling, and the like.

The present inventors made intensive studies to find out that a method of applying a film onto the aluminum material can solve the above problems, resulting in completing the present invention.

### Summary of the Invention:

The present invention firstly provides an automobile body-coating method which comprises optionally subjecting an outer plate area and/or an inner plate area of an automobile body comprising an aluminum material, an aluminum material-coated steel material or an aluminum material and steel material-combined metal material to a surface treatment, successively followed by coating a heat-curable electrodeposition coating composition to form a curable electrodeposition coating film, (1) coating a heat-curable water based intercoat coating composition to form a water based intercoat coating film or coating a heat-curable intercoat powder coating composition to form an intercoat powder coating film, (2) coating a water based chipping primer to form a water based chipping primer coating film followed by coating a heat-curable water based intercoat coating composition to form a water based intercoat coating film or coating a heat-curable intercoat powder coating composition to form an intercoat powder coating film, or (3) coating a water based chipping primer to form a water based chipping primer coating film, and coating a topcoat coating composition to form a curable topcoat coating film, respective coating films being heat cured independently from each other to cure all of the respective coating films, or at least one multi-layer coating film selected from the group consisting of successively formed at least two-layer coating films being heat-cured simultaneously and at least one remaining coating film being independently cured respectively (hereinafter referred to as a first invention).

The present invention secondly provides an automobile body-coating method for coating an outer plate area and/or an inner plate area of an automobile body comprising an oxidized aluminum material or an oxidized aluminum material and steel material-combined metal material, which method comprises (1) electrodeposition coating a heat-curable electrodeposition coating composition onto the surface of the oxidized aluminum material in the outer plate area and/or the inner plate area of the automobile body to form an electrodeposition coating film followed by heat curing, optionally the steel material being subjected to a surface treatment followed by being subjected to an electrodeposition coating, or (2) coating a heat-curable water based intercoat coating composition or a heat-curable intercoat powder coating composition onto the outer plate area and/or the inner plate area of the automobile body to form a water based intercoat coating film or an intercoat powder coating film respectively followed by creating a curable topcoat coating composition to form a curable topcoat coating film, and heat curing both coating films independently from each other or simultaneously, optionally the steel material being subjected to an electrodeposition coating (hereinafter referred to as a second invention).

The present invention thirdly provides an automobile body-coating method which comprises applying a film facing material onto the surface of an aluminum material or an aluminum material-coated steel material in an outer plate area and/or an inner plate area of the automobile body comprising an aluminum material, an aluminum-coated steel material or an aluminum material and steel material-combined metal material, the film facing material being applied onto the surface of an aluminum material which is optionally subjected to a surface treatment, followed by being subjected to an oxidizing treatment (hereinafter referred to as a third invention).

### Detailed Description of the Invention:

The first invention provides in a first embodiment respectively;
1. an automobile body coating method which comprises optionally subjecting an outer plate area and/or an inner plate area in an automobile body comprising an aluminum material, an aluminum material-coated steel material or an aluminum material and steel material-combined metal material to a surface treatment, successively followed by coating a heat-curable electrodeposition coating composition and heat-curing, coating a heat-curable water based intercoat coating composition or a heat-curable intercoat powder coating composition and heat-curing, and coating a curable topcoat coating composition and curing;
2. an automobile body-coating method which comprises optionally subjecting an outer plate area and/or an inner plate area in an automobile body comprising an aluminum material, an aluminum-coated steel material or an aluminum material and steel material-combined metal material, successively followed by coating a heat-curable electrodeposition coating composition and setting or predrying, coating a heat-curable water based intercoat coating composition or a heat-curable intercoat powder coating composition and heating to cure both an electrodeposition coating film and an intercoat coating film simultaneously, and coating a curable topcoat coating composition and curing;
3. an automobile body coating method which comprises optionally subjecting an outer plate area and/or an inner plate area in an automobile body comprising an aluminum material, an aluminum material-coated steel material or an aluminum material and steel material-combined metal material to a surface treatment, successively followed by coating a heat-curable electrodeposition coating composition and setting or predrying, coating a heat-curable water based intercoat coating composition or a heat-curable intercoat powder coating composition and setting or predrying, coating a heat-curable topcoat coating composition, and heat-curing an electrodeposition coating film, an intercoat coating film and a topcoat coating film simultaneously; and
4. an automobile body-coating method which comprises optionally subjecting an outer plate area and/or an inner plate area in an automobile body comprising an aluminum material, an aluminum material-coated steel material or an aluminum material and steel material-combined metal material to a surface treatment, successively followed by coating a heat-curable electrodeposition coating composition and heat-curing, coating a heat-curable water based intercoat coating composition or a heat-curable intercoat powder coating composition and setting or predrying, coating a heat-curable topcoat coating composition, and heat-curing an intercoat coating film and a topcoat coating film simultaneously.

The first invention provides in a second embodiment respectively;
1. an automobile body-coating method which comprises optionally subjecting an outer plate area and/or an inner plate area in an automobile body comprising an aluminum material, an aluminum material-coated steel material or an aluminum material and steel material-combined metal material to a surface treatment, followed by successively forming a heat-curable electrodeposition coating film, a water based chipping primer coating film, a heat-curable water based intercoat coating film or a heat-curable intercoat powder coating film and a curable topcoat coating film (4C);
2. an automobile body-coating method which comprises optionally subjecting an outer plate area and/or an inner plate area of an automobile body comprising an aluminum material, an aluminum material-coated steel material or an aluminum material and steel material-combined metal material to a surface treatment, successively followed by coating a heat-curable electrodeposition coating composition and heat-curing, coating a water based chipping primer coating composition and heat-curing, coating a heat-curable water based intercoat coating composition or a heat-curable intercoat powder coating composition and heat-curing, and coating a curable topcoat coating composition and curing;
3. an automobile body-coating method which comprises optionally subjecting an outer plate area and/or an inner plate area of an automobile body comprising an aluminum material, an aluminum material-coated steel material or an aluminum material and steel material-combined metal material to a surface treatment, successively followed by coating a heat-curable electrodeposition coating composition and setting or predrying, coating a water based chipping primer coating composition and heat-curing, coating a heat-curable water based intercoat coating composition or a heat-curable intercoat powder coating composition and heat-curing, and coating a curable topcoat coating composition and curing;
4. an automobile body-coating method which comprises optionally subjecting an outer plate area and/or an inner plate area of an automobile body comprising an aluminum material, an aluminum material-coated steel material or an aluminum material and steel material-combined metal material to a surface treatment, successively followed by coating a heat-curable electrodeposition coating composition and heat-curing, coating a water based chipping primer coating composition and setting or predrying, coating a heat-curable water based intercoat coating composition or a heat-curable intercoat powder coating composition and heat-curing, and coating a curable topcoat coating composition and curing;
5. an automobile body-coating method which comprises optionally subjecting an outer plate area and/or an inner plate area of an automobile body comprising an aluminum material, an aluminum material-coated steel material or an aluminum material and steel material-combined metal material to a surface treatment, successively followed by coating a heat-curable electrodeposition coating composition and heat-curing, coating a water based chipping primer coating composition and heat-curing, coating a heat-curable water based intercoat coating composition or a heat-curable intercoat powder coating composition and setting or predrying, and coating a curable topcoat coating composition and curing;
6. an automobile body-coating method which comprises optionally subjecting an outer plate area and/or an inner plate area of an automobile body comprising an aluminum material, an aluminum material-coated steel material or an aluminum material and steel material-combined metal material to a surface treatment, successively followed by coating a heat-curable electrodeposition coating composition and setting or predrying, coating a water based chipping primer coating composition and setting or predrying, coating a heat-curable water based intercoat coating composition or a heat-curable intercoat powder coating composition and heat-curing, and coating a curable topcoat coating composition and curing;
7. an automobile body-coating method which comprises optionally subjecting an outer plate area and/or an inner plate area of an automobile body comprising an aluminum material, an aluminum material-coated steel material or an aluminum material and steel material-combined metal material to a surface treatment, successively followed by coating a heat-curable electrodeposition coating composition and setting or predrying, coating a water based chipping primer coating composition and heat-curing, coating a heat-curable water based intercoat coating composition or a heat-curable intercoat powder coating composition and setting or predrying, and coating a curable topcoat coating composition and curing;
8. an automobile body-coating method which comprises optionally subjecting an outer plate area and/or an inner plate area of an automobile body comprising an aluminum material, an aluminum material-coated steel material or an aluminum material and steel material-combined metal material to a surface treatment, successively followed by coating a heat-curable electrodeposition coating composition and heat-curing, coating a water based chipping primer coating composition and setting or predrying, coating a heat-curable water based intercoat coating composition or a heat-curable intercoat powder coating composition and setting or predrying, and coating a curable topcoat coating composition and curing; and
9. an automobile body-coating method which comprises optionally subjecting an outer plate area and/or an inner plate area of an automobile body comprising an aluminum material, an aluminum material-coated steel material or an aluminum material and steel material-combined metal material to a surface treatment, successively followed by coating a heat-curable electrodeposition coating composition and setting or predrying, coating a water based chipping primer coating composition and setting or predrying, coating a heat-curable water based intercoat coating composition or a heat-curable intercoat powder coating composition and setting or predrying, and coating a curable topcoat coating composition and curing.

The first invention provides in a third embodiment respectively;
1. an automobile body-coating method which comprises optionally subjecting an outer plate area and/or an inner plate area of an automobile body comprising an aluminum material, an aluminum material-coated steel material or an aluminum material and steel material-combined metal material to a surface treatment, successively followed by forming a heat-curable electrodeposition coating film, a water based chipping primer coating film, and a curable topcoat coating film;
2. an automobile body-coating method which comprises optionally subjecting an outer plate area and/or an inner plate area of an automobile body comprising an aluminum material, an aluminum material-coated steel material or an aluminum material and steel material-combined metal material to a surface treatment, successively followed by coating a heat-curable electrodeposition coating composition and heat-curing, coating a water based chipping primer coating composition and heat-curing, and coating a curable topcoat coating composition and curing;
3. an automobile body-coating method which comprises optionally subjecting an outer plate area and/or an inner plate area of an automobile body comprising an aluminum material, an aluminum material-coated steel material or an aluminum material and steel material-combined metal material to a surface treatment, successively followed by coating a heat-curable electrodeposition coating composition and setting or predrying, coating a water based chipping primer coating composition and heat-curing, and coating a curable topcoat coating composition and curing;
4. an automobile body-coating method which comprises optionally subjecting an outer plate area and/or an inner plate area of an automobile body comprising an aluminum material, an aluminum material-coated steel material or an aluminum material and steel material-combined metal material to a surface treatment, successively followed by coating a heat-curable electrodeposition coating composition and heat-curing, coating a water based chipping primer coating composition and setting or predrying, and coating a curable topcoat coating composition and curing; and
5. an automobile body-coating method which comprises optionally subjecting an outer plate area and/or an inner plate area of an automobile body comprising an aluminum material, an aluminum material-coated steel material or an aluminum material and steel material-combined metal material to a surface treatment, successively followed by coating a heat-curable electrodeposition coating composition and setting or predrying, coating a water based chipping primer coating composition and setting or predrying, and coating a curable topcoat coating composition and curing.

The automobile body-coating method in the first embodiment of the first invention is characterized in that the coating method comprises the following steps, a step of coating a heat-curable electrodeposition coating composition onto an automobile body partly or totally comprising an aluminum material, a step of coating a water based or powder intercoat coating composition, and a step of coating a curable topcoat coating composition, that respective coating films are cured by particular curing methods, and that the aluminum material has a degree of surface roughness of 0.2 µm or less in terms of Ra.

The coating method in the first embodiment of the first invention, in the case where a sole metal base material such as an aluminum material, an aluminum material-coated steel material and the like is used as a base material of the automobile body, may be carried out by the following methods, for example,
(1) a method which comprises subjecting the metal base material to a press molding into a predetermined part material such as an engine hood, fender panel and the like, followed by optionally subjecting to a surface treatment, assembling the surface-treated part material to the automobile body, respectively subjecting to an electrodeposition coating, an intercoat coating and a topcoat coating;
(2) a method which comprises subjecting the metal base material to a press molding into a predetermined part material, followed by optionally subjecting to a surface treatment, subjecting to an electrodeposition coating, assembling the electrodeposition-coated part material to the automobile body, respectively subjecting to an intercoat coating and a topcoat coating;
(3) a method which comprises subjecting the metal base material to a press molding into a predetermined part material, followed by optionally subjecting to a surface treatment, respectively subjecting to an electrodeposition coating and an intercoat coating, assembling the intercoat-coated part material to the automobile body, and subjecting to a topcoat coating; and
(4) a method which comprises subjecting the metal base material to a press molding into a predetermined part material, followed by optionally subjecting to a surface treatment, respectively subjecting to an electrodeposition coating, an intercoat coating and a topcoat coating, and assembling the topcoat-coated part material to the automobile body.

The coating method in the first embodiment of the first invention, in the case where an aluminum material and a steel material-combined metal material is used as a base material of the automobile body, may be carried out by the following methods, for example,
(1) a method which comprises assembling to the automobile body a surface-treated aluminum part material prepared by subjecting an aluminum material to a press molding into a predetermined part material such as an engine hood, fender panel and the like followed by optionally subjecting to a surface treatment, and a surface-treated steel part material prepared by subjecting a steel material to a press molding into a predetermined part material such as an engine hood, fender panel and the like, followed by subjecting to a surface treatment, followed by respectively subjecting to an electrodeposition coating, an intercoat coating and a topcoat coating;
(2) a method which comprises assembling to the automobile body an electrodeposition-coated aluminum part material prepared by subjecting an aluminum material to a press molding into a predetermined part material such as an engine hood, fender panel and the like, followed by optionally subjecting to a surface treatment, and subjecting the surface-treated aluminum part material to an electrodeposition coating, and an electrodeposition-coated steel part material prepared by subjecting a steel material to a press molding into a predetermined part material such as an engine hood, fender panel and the like, followed by subjecting to a surface treatment, and subjecting to an electrodeposition coating, followed by respectively subjecting to an intercoat coating and a topcoat coating;
(3) a method which comprises assembling to the automobile body an intercoat-coated aluminum part material prepared by subjecting an aluminum material to a press molding into a predetermined part material such as an engine hood, fender panel and the like, followed by optionally subjecting to a surface treatment, respectively subjecting the surface-treated aluminum part material to an electrodeposition coating and an intercoat coating, and an intercoat-coated steel part material prepared by subjecting a steel material to a press molding into a predetermined part material such as an engine hood, fender panel and the like, followed by subjecting to a surface treatment, and respectively subjecting the surface-treated steel part material to an electrodeposition coating and an intercoat coating, followed by subjecting to a topcoat coating; and
(4) a method which comprises assembling a topcoat-coated aluminum part material prepared by subjecting an aluminum material to a press molding into a predetermined part material such as an engine hood, fender panel and the like, followed by optionally subjecting to a surface treatment, and respectively subjecting the surface-treated aluminum part material to an electrodeposition coating, an intercoat coating and a topcoat coating, and a topcoat-coated steel part material prepared by subjecting a steel material to a press molding into a predetermined part material such as an engine hood, fender panel and the like, followed by subjecting to a surface treatment, and respectively subjecting the surface-treated steel part material to an electrodeposition coating, an intercoat coating and a topcoat coating.

In addition to the above methods, for example, orders of respective coating steps of the aluminum material and the steel material may be varied. Specifically, a steel material may be subjected to a press molding into a predetermined part material such as an engine hood, fender panel and the like, followed by assembling the steel part material to the automobile body, and respectively subjecting to a surface treatment and an electrodeposition coating to prepare an electrodeposition-coated steel part material-assembled automobile body.

Separately, an aluminum material is subjected to a press molding into a predetermined part material such as an engine hood, fender panel and the like, followed by optionally subjecting to a surface treatment, respectively subjecting the surface-treated aluminum part material to an electrodeposition coating, an intercoat coating and a topcoat coating, and assembling the topcoat-coated aluminum part material to the electrodeposition-coated steel part material-assembled automobile body.

The automobile body-coating method in the second embodiment of the first invention is characterized in that the coating method comprises the following steps, a step of coating a heat-curable electrodeposition coating composition onto an automobile body partly or totally comprising an aluminum material, a step of coating a water based chipping primer coating composition, a step of coating a water based or powder intercoat coating composition, and a step of coating a curable topcoat coating composition, that respective coating films are cured by particular curing methods, and that the aluminum material has a degree of surface roughness of 0.2 µm or less in terms of Ra.

The coating method in the first embodiment of the first invention, in the case where a sole metal base material such as an aluminum material, an aluminum material-coated steel material and the like is used as a base material of the automobile body, may be carried out by the following methods, for example,
(1) a method which comprises subjecting the metal base material to a press molding into a predetermined part material such as an engine hood, fender panel and the like, followed by optionally subjecting to a surface treatment, assembling the surface-treated part material to the automobile body, respectively subjecting to an electrodeposition coating, a water based chipping primer coating, an intercoat coating and a topcoat coating;
(2) a method which comprises subjecting the metal base material to a press molding into a predetermined part material, followed by optionally subjecting to a surface treatment, subjecting to an electrodeposition coating, assembling the electrodeposition-coated part material to the automobile body, respectively subjecting to a water based chipping primer coating, an intercoat coating and a topcoat coating;
(3) a method which comprises subjecting the metal base material to a press molding into a predetermined part material, followed by optionally subjecting to a surface treatment, respectively subjecting to an electrodeposition coating, and a water based chipping primer coating, assembling a chipping primer-coated part material to the automobile body, and respectively subjecting to an intercoat coating and a topcoat coating;
(4) a method which comprises subjecting the metal base material to a press molding into a predetermined part material, followed by optionally subjecting to a surface treatment, respectively subjecting to an electrodeposition coating, a water based chipping primer coating, an intercoat coating, assembling the intercoat-coated part material to the automobile body, and subjecting to a topcoat coating; and
(5) a method which comprises subjecting the metal base material to a press molding into a predetermined part material, followed by optionally subjecting to a surface treatment, respectively subjecting to an electrodeposition coating, a water based chipping primer coating, an intercoat coating and a topcoat coating, and assembling the topcoat-coated part material to the automobile body.

The coating method in the second embodiment of the first invention, in the case where an aluminum material and a steel material-combined metal material is used as a base material of the automobile body, may be carried out by the following methods, for example,
(1) a method which comprises assembling to the automobile body a surface-treated aluminum part material prepared by subjecting an aluminum material to a press molding into a predetermined part material such as an engine hood, fender panel and the like followed by optionally subjecting to a surface treatment, and a surface-treated steel part material prepared by subjecting a steel material to a press molding into a predetermined part material such as an engine hood, fender panel and the like, followed by subjecting to a surface treatment, followed by respectively subjecting to an electrodeposition coating, a water based chipping primer coating, an intercoat coating and a topcoat coating;
(2) a method which comprises assembling to the automobile body an electrodeposition-coated aluminum part material prepared by subjecting an aluminum material to a press molding into a predetermined part material such as an engine hood, fender panel and the like, followed by optionally subjecting to a surface treatment, and subjecting the surface-treated aluminum part material to an electrodeposition coating, and an electrodeposition-coated steel part material prepared by subjecting a steel material to a press molding into a predetermined part material such as an engine hood, fender panel and the like, followed by subjecting to a surface treatment, and subjecting to an electrodeposition coating, followed by respectively subjecting to a water based chipping primer coating, an intercoat coating and a topcoat coating;
(3) a method which comprises assembling to the automobile body a water based chipping primer-coated aluminum part material prepared by subjecting an aluminum material to a press molding into a predetermined part material such as an engine hood, fender panel and the like, followed by optionally subjecting to a surface treatment, respectively subjecting the surface-treated aluminum part material to an electrodeposition coating and a water based chipping primer coating, and a water based chipping primer-coated steel part material prepared by subjecting a steel material to a press molding into a predetermined part material such as an engine hood, fender panel and the like, followed by subjecting to a surface treatment, and respectively subjecting the surface-treated steel part material to an electrodeposition coating and a water based chipping primer coating, followed by respectively subjecting to an intercoat coating, and a topcoat coating;
(4) a method which comprises assembling an intercoat-coated aluminum part material prepared by subjecting an aluminum material to a press molding into a predetermined part material such as an engine hood, fender panel and the like, followed by optionally subjecting to a surface treatment, and respectively subjecting the surface-treated aluminum part material to an electrodeposition coating, a water based chipping primer coating and an intercoat coating, and an intercoat-coated steel part material prepared by subjecting a steel material to a press molding into a predetermined part material such as an engine hood, fender panel and the like, followed by subjecting to a surface treatment, and respectively subjecting the surface-treated steel part material to an electrodeposition coating, a water based chipping primer coating and an intercoat coating, followed by subjecting to a topcoat coating;
(5) a method which comprises assembling to the automobile body a topcoat-coated aluminum part material prepared by subjecting an aluminum material to a press molding into a predetermined part material such as an engine hood, fender panel and the like, followed by optionally subjecting to a surface treatment, and respectively subjecting the surface-treated aluminum part material to an electrodeposition coating, a water based chipping primer coating, an intercoat coating and a topcoat coating, and a topcoat-coated steel part material prepared by subjecting a steel material to a press molding into a predetermined part material such as an engine hood, fender panel and the like, followed by subjecting to a surface treatment, and respectively subjecting the surface-treated steel part material to an electrodeposition coating, a water based chipping primer coating, an intercoat coating and a topcoat coating.

In addition to the above methods, for example, orders of respective coating steps of the aluminum material and the steel material may be varied. Specifically, a steel material may be subjected to a press molding into a predetermined part material such as an engine hood, fender panel and the like, followed by assembling the steel part material to the automobile body, and respectively subjecting to a surface treatment and an electrodeposition coating to prepare an electrodeposition-coated steel part material-assembled automobile body.

Separately, an aluminum material is subjected to a press molding into a predetermined part material such as an engine hood, fender panel and the like, followed by optionally subjecting to a surface treatment, respectively subjecting the surface-treated aluminum part material to an electrodeposition coating, a water based chipping primer coating, an intercoat coating and a topcoat coating, and assembling the topcoat-coated aluminum part material to the electrodeposition-coated steel part material-assembled automobile body.

The above heat-curing means curing at a curing temperature when heat-curable. The above setting or predrying means drying under essentially non-curable conditions when heat-curable. In the topcoat coating composition, in the case where an actinic ray-curable topcoat coating composition is used, the meaning of heat-curing may be replaced with a meaning of irradiation of actinic rays for explanation. The term 4C4B represented in the coating method means 4 coating steps and 4 curing steps.

The automobile body-coating method in the third embodiment of the first invention is characterized in that the coating method comprises the following steps, a step of coating a heat-curable electrodeposition coating composition onto an automobile body partly or totally comprising an aluminum material, a step of coating a water based chipping primer coating composition, and a step of coating a curable topcoat coating composition, that respective coating films are cured by particular curing methods, and that the aluminum material has a degree of surface roughness of 0.2 µm or less in terms of Ra.

The coating method in the third embodiment of the first invention, in the case where a sole metal base material such as an aluminum material, an aluminum material-coated steel material and the like is used as a base material of the automobile body, may be carried out by the following methods, for example,
(1) a method which comprises subjecting the metal base material to a press molding into a predetermined part material such as an engine hood, fender panel and the like, followed by optionally subjecting to a surface treatment, assembling the surface-treated part material to the automobile body, respectively subjecting to an electrodeposition coating, a water based chipping primer coating, and a topcoat coating;
(2) a method which comprises subjecting the metal base material to a press molding into a predetermined part material, followed by optionally subjecting to a surface treatment, subjecting to an electrodeposition coating, assembling the electrodeposition-coated part material to the automobile body, respectively subjecting to a water based chipping primer coating, and a topcoat coating;
(3) a method which comprises subjecting the metal base material to a press molding into a predetermined part material, followed by optionally subjecting to a surface treatment, respectively subjecting to an electrodeposition coating, and a water based chipping primer coating, assembling a chipping primer-coated part material to the automobile body, and subjecting to a topcoat coating;
(4) a method which comprises subjecting the metal base material to a press molding into a predetermined part material, followed by optionally subjecting to a surface treatment, respectively subjecting to an electrodeposition coating, a water based chipping primer coating, an intercoat coating, assembling the intercoat-coated part material to the automobile body, and subjecting to a topcoat coating; and
(5) a method which comprises subjecting the metal base material to a press molding into a predetermined part material, followed by optionally subjecting to a surface treatment, respectively subjecting to an electrodeposition coating, a water based chipping primer coating, and a topcoat coating, and assembling the topcoat-coated part material to the automobile body.

The coating method in the third embodiment of the first invention, in the case where an aluminum material and a steel material-combined metal material is used as a base material of the automobile body, may be carried out by the following methods, for example,
(1) a method which comprises assembling to the automobile body a surface-treated aluminum part material prepared by subjecting an aluminum material to a press molding into a predetermined part material such as an engine hood, fender panel and the like followed by optionally subjecting to a surface treatment, and a surface-treated steel part material prepared by subjecting a steel material to a press molding into a predetermined part material such as an engine hood, fender panel and the like, followed by subjecting to a surface treatment, followed by respectively subjecting to an electrodeposition coating, a water based chipping primer coating, a water based chipping primer coating, and a topcoat coating;
(2) a method which comprises assembling to the automobile body an electrodeposition-coated aluminum part material prepared by subjecting an aluminum material to a press molding into a predetermined part material such as an engine hood, fender panel and the like, followed by optionally subjecting to a surface treatment, and subjecting the surface-treated aluminum part material to an electrodeposition coating, and an electrodeposition-coated steel part material prepared by subjecting a steel material to a press molding into a predetermined part material such as an engine hood, fender panel and the like, followed by subjecting to a surface treatment, and subjecting to an electrodeposition coating, followed by respectively subjecting to a water based chipping primer coating, and a topcoat coating;
(3) a method which comprises assembling to the automobile body a water based chipping primer-coated aluminum part material prepared by subjecting an aluminum material to a press molding into a predetermined part material such as an engine hood, fender panel and the like, followed by optionally subjecting to a surface treatment, respectively subjecting the surface-treated aluminum part material to an electrodeposition coating and a water based chipping primer coating, and a water based chipping primer-coated steel part material prepared by subjecting a steel material to a press molding into a predetermined part material such as an engine hood, fender panel and the like, followed by subjecting to a surface treatment, and respectively subjecting the surface-treated steel part material to an electrodeposition coating and a water based chipping primer coating, followed by subjecting to a topcoat coating; and
(4) a method which comprises assembling to the automobile body a topcoat-coated aluminum part material prepared by subjecting an aluminum material to a press molding into a predetermined part material such as an engine hood, fender panel and the like, followed by optionally subjecting to a surface treatment, and respectively subjecting the surface-treated aluminum part material to an electrodeposition coating, a water based chipping primer coating, and a topcoat coating, and a topcoat-coated steel part material prepared by subjecting a steel material to a press molding into a predetermined part material such as an engine hood, fender panel and the like, followed by subjecting to a surface treatment, and respectively subjecting the surface-treated steel part material to an electrodeposition coating, a water based chipping primer coating, and a topcoat coating.

In addition to the above methods, for example, orders of respective coating steps of the aluminum material and the steel material may be varied. Specifically, a steel material may be subjected to a press molding into a predetermined part material such as an engine hood, fender panel and the like, followed by assembling the steel part material to the automobile body, and respectively subjecting to a surface treatment and an electrodeposition coating to prepare an electrodeposition-coated steel part material-assembled automobile body.

Separately, an aluminum material is subjected to a press molding into a predetermined part material such as an engine hood, fender panel and the like, followed by optionally subjecting to a surface treatment, respectively subjecting the surface-treated aluminum part material to an electrodeposition coating, a water based chipping primer coating, and a topcoat coating, and assembling the topcoat-coated aluminum part material to the electrodeposition-coated steel part material-assembled automobile body.

The second invention in a first embodiment provides an automobile body-coating method for coating an outer plate area and/or an inner plate area of an automobile body comprising an oxidized aluminum material or an oxidized aluminum material and steel material-combined metal material, which method comprises (1) electrodeposition coating a heat-curable electrodeposition coating composition onto the surface of the oxidized aluminum material in the outer plate area and/or the inner plate area of the automobile body to form an electrodeposition coating film followed by heat curing, optionally the steel material being subjected to a surface treatment followed by being subjected to an electrodeposition coating.

The second invention in a second embodiment provides an automobile body-coating method for coating an outer plate area and/or an inner plate area of an automobile body comprising an oxidized aluminum material or an oxidized aluminum material and steel material-combined metal material, which method comprises (2) coating a heat-curable water based intercoat coating composition or a heat-curable intercoat powder coating composition onto the outer plate area and/or the inner plate area of the automobile body to form a water based intercoat coating film or an intercoat powder coating film respectively followed by creating a curable topcoat coating composition to form a curable topcoat coating film, and heat curing both coating films independently from each other or simultaneously, optionally the steel material being subjected to an electrodeposition coating.

The automobile body-coating method in the first embodiment of the second invention is characterized in that a heat-curable electrodeposition coating film is formed onto the surface of an oxidized aluminum material in the automobile body partly or totally comprising the oxidized aluminum material, and that a particular aluminum material is used as the oxidized aluminum material.

The coating method in the first embodiment of the second invention, in the case where an oxidized aluminum material is used as a base material of the automobile body, may be carried out by the following methods; for example,
(1) a method which comprises subjecting the metal material to a press molding into a predetermined part material such as an engine hood, fender panel and the like, followed by subjecting to an oxidizing surface treatment, assembling the oxidizing surface-treated part material to the automobile body, and subjecting to an electrodeposition coating; and
(2) a method which comprises subjecting the metal base material to a press molding into a predetermined part material, followed by subjecting to an oxidizing surface treatment, subjecting to an electrodeposition coating, and assembling the electrodeposition-coated part material to the automobile body.

The coating method in the first embodiment of the second invention, in the case where an oxidized aluminum and a steel material-combined metal material is used as a base material of the automobile body, may be carried out by the following methods; for example,
(1) a method which comprises assembling to the automobile body an oxidized aluminum part material prepared by subjecting an aluminum material to a press mold into a predetermined part material such as an engine hood, fender panel and the like, followed by subjecting to an oxidizing surface treatment, and a surface-treated steel part material prepared by subjecting a steel material to a press molding into a predetermined part material such as an engine hood, fender panel and the like, followed by subjecting to a surface treatment, and followed by subjecting to an electrodeposition coating; and
(2) a method which comprises assembling an electrodeposition coated aluminum part material prepared by subjecting an aluminum material to a press molding into a predetermined part material such as an engine hood, fender panel and the like, followed by subjecting to an oxidizing surface treatment, and subjecting the oxidized aluminum part material to an electrodeposition coating, and an electrodeposition coated steel part material prepared by subjecting a steel material to a press molding into a predetermined part material such as an engine hood, fender panel and the like, followed by subjecting to a surface treatment and subjecting the surface-treated steel part material to an electrodeposition coating.

Optionally, a chipping primer coating film such as a barrier coating film, an intercoat cured coating film and a topcoat cured coating film as known in the field of the automobile coating composition may successively be formed onto the surface of the above electrodeposition coating film.

The oxidized aluminum material may include ones prepared by subjecting an aluminum material known in the art to a chemical surface treatment on an anodizing surface treatment.

The automobile body-coating method in the second embodiment of the second invention is characterized in that the coating method comprises coating onto an automobile body partly or totally comprising an aluminum material a water based or powder intercoat coating composition, followed by coating a curable topcoat coating composition, that respective coating films are cured by a particular curing method, that an oxidized aluminum material having a degree of surface roughness of 0.2 µm or less in terms of Ra is used as the aluminum material.

The coating method in the second embodiment of the second invention, in the case where an oxidized aluminum material is used as a base material of the automobile body, may be carried out by the following methods; for example,
(1) a method which comprises subjecting the metal material to a press molding into a predetermined part material such as an engine hood, fender panel and the like, followed by subjecting to an oxidizing surface treatment, assembling the oxidizing part material to the automobile body, respectively subjecting to an intercoat coating and a topcoat coating;
(2) a method which comprises subjecting the metal base material to a press molding into a predetermined part material such as an engine hood, fender panel and the like, followed by subjecting to an oxidizing surface treatment, subjecting the oxidized part material to an intercoat coating, assembling the intercoat-coated part material to the automobile body, and subjecting to a topcoat coating; and
(3) a method which comprises subjecting the metal base material to a press molding into a predetermined part material such as an engine hood, fender panel and the like, followed by subjecting to an oxidizing surface treatment, subjecting the oxidized part material to an intercoat coating, subjecting to a topcoating, and assembling the topcoated part material to the automobile body.

The coating method in the second embodiment of the second invention, in the case where an aluminum and a steel material-combined metal material is used as a base material of the automobile body, may be carried out by the following methods; for example,
(1) a method which comprises assembling to the automobile body an oxidized aluminum part material prepared by subjecting the aluminum material to a press molding into a predetermined part material such as an engine hood, fender panel and the like, followed by subjecting to an oxidizing surface treatment, and a surface-treated steel part material prepared by subjecting the steel material to a press molding into a predetermined part material such as an engine hood, fender panel and the like, followed by subjecting to a surface treatment, respectively subjecting to an intercoat coating and a topcoat coating;
(2) a method which comprises assembling to the automobile body an intercoat-coated aluminum part material prepared by subjecting the aluminum material to a press molding into a predetermined part material such as an engine hood, fender panel and the like, followed by subjecting to an oxidizing surface treatment, subjecting the oxidized aluminum part material to an intercoat coating, and an intercoat-coated steel part material prepared by subjecting the steel material to a press molding into a predetermined part material such as an engine hood, fender panel and the like, followed by subjecting to a surface treatment, subjecting the surface-treated steel part material to an electrodeposition coating, an intercoat coating, and subjecting to a topcoat coating; and
(3) a method which comprises assembling to the automobile body a topcoat-coated aluminum part material prepared by subjecting the aluminum material to a press molding into a predetermined part material such as an engine hood, fender panel and the like, followed by subjecting to an oxidizing surface treatment, subjecting the oxidized aluminum part material to an intercoat coating and subjecting to a topcoat coating, and a topcoat-coated steel part material prepared by subjecting the steel material to a press molding into a predetermined part material such as an engine hood, fender panel and the like, followed by subjecting to a surface treatment, respectively subjecting the oxidized aluminum part material to an electrodeposition coating, an intercoat coating and a topcoat coating.

In addition to the above methods, for example, orders of respective coating steps of the aluminum material and the steel material may be varied. Specifically, a steel material may be subjected to a press molding into a predetermined part material such as an engine hood, fender panel and the like, followed by assembling the steel part material to the automobile body, and respectively subjecting to a surface treatment and an electrodeposition coating to prepare an electrodeposition-coated steel part material-assembled automobile body.

Separately, an aluminum material is subjected to a press molding into a predetermined part material such as an engine hood, fender panel and the like, followed by optionally subjecting to an oxidizing surface treatment, respectively subjecting the surface-treated aluminum part material to an intercoat coating and a topcoat coating, and assembling the topcoat-coated aluminum part material to the electrodeposition-coated steel part material-assembled automobile body.

Optionally, a chipping primer coating film such as a barrier coating film as known in the field of the automobile coating composition may be formed onto the surface of the above oxidized coating film.

The oxidized aluminum material may include ones prepared by subjecting an aluminum material known in the art to a chemical surface treatment or an anodizing surface treatment.

The coating method of the third invention is characterized in that the coating method relates to a method which comprises applying a film facing material to the automobile body partly or totally comprising an aluminum material, and that the aluminum material has a degree of surface roughness of 0.2 µm or less in terms of Ra.

The aluminum material used in the present invention may include ones used in the field of the automobile body without particular limitations, specifically may include an aluminum alloy base material such as a JIS A5000 series aluminum alloy plate containing magnesium, a JIS A6000 series aluminum alloy base material containing magnesium and silica, and the like.

In the present invention, of these aluminum alloy base materials, the JIS A6000 series aluminum alloy base material is particularly preferable in that more than once heat-curing of a coating composition at a temperature of 140°C or higher may impart strength and hardness to the coating film due to the metals contained therein. A content of the metals may preferably be in the range of 0.5 to 3% by weight.

The aluminum material preferably has a degree of surface roughness as measured by use of a JIS B0601 three dimensional degree of roughness meter in the range of 0.2 µm or less, particularly 0.1 µm or less in terms of Ra. A Ra more than 0.2 µm may reduce smoothness of an electrodeposition coating film formed onto the aluminum material, resulting in reducing smoothness of a topcoat coating film and reducing gloss of a finished coating film. On the other hand, a Ra less than 0.01 µm may result poor adhesion properties between a cationic electrodeposition coating film and the aluminum material. The degree of surface roughness of the aluminum material may be controlled by a control of a degree of roughness of a roll on rolling and by a surface treatment technique such as a mechanical polishing, chemical polishing, electropolishing and the like. Of these, the electropolishing is preferable because of making easily possible a polishing with a fine roughness.

The aluminum-coated steel material in the first and third invention may include, for example, an aluminum-electroplated steel plate, a molten aluminum-coated steel plate and the like.

The surface treatment of the aluminum material and the aluminum-coated steel material may be carried out by the conventional surface treatment.

In the case where the anodizing treatment is not carried out, the surface treatment may be carried out by the following steps (1) to (3):
(1) pretreatment: aluminum material-mechanical polishing-degreasing (acid, acid salt, alkali, alkali salt, organic solvent, surface active agent, electrodegreasing, etc.) - washing with water (including neutralization) - chemical polishing - washing with water;
(2) chemical surface treatment: A surface treating agent used in the chemical surface treatment may include, for example, a phosphate based treating agent (albond method, zinc phosphate, iron phosphate, manganese phosphate), alcohol phosphate based treating agent, phosphate chromate based treating agent, sodium carbonate based treating agent, chromate based treating agent (chromate, bichromate), vamite process (treatment by use of a steam at 120 to 150°C, treatment by distilled water at 100°C, treatment by an amine-containing distilled water at 100°C), titanium based surface treating agent, fluorine based surface treating agent, and the like. The surface treating agent may also include an etching agent (inorganic acid, organic acid, salts thereof), heavy metals (Zr, Mo, W, Ti, Mn, Zn, Ni, etc.), salts thereof (nitric acid, phosphoric acid, hydrofluoric acid, etc.), and a surface treating agent using organic and/or inorganic weakly basic or weakly acidic substances prepared optionally by adding a binder (phenol resin, carboxylized polyolefin based resin, etc.), anticorrosive agent (vanadate, organosulfonic acid, gallic acid based compound, sulfide, triazinethiol, benzotriazole, thiocarbonyl compound, etc.), adhesion-imparting agent (silane coupling agent, silica gel, aerosil, etc.) and the like.
   Of these, the treatment by use of the zinc phosphate treating agent is preferable, which treating agent is such that a compound such as phosphoric acid, zinc acid phosphate, potassium fluoride and the like is used as a starting material, that the treating agent is brought into contact with the aluminum material so that etching of the aluminum may take place and the eluted aluminum may be reacted with phosphoric acid and fluoric acid to form an aluminum salt, and that the zinc acid phosphate (zinc 2-hydrogen phosphate) may be reacted with aluminum and fluoric acid to form zinc 3-hydrogen phosphate, which deposits on the surface of the aluminum material to form a film.
(3) post-treatment: washing with water - drying.

In the case where the anodizing treatment is carried out, the surface treatment of the aluminum material may be carried out by the following steps ① to ③:
- ①: degreasing - alkali etching - desmat - anodizing treatment - sealing treatment,
- ②: degreasing - alkali etching - desmat - anodizing treatment - secondary electrolytic coloring,
- ③: degreasing - polishing (electropolishing, chemical polishing, matte finish, etc.) - anodizing treatment - (optionally dying).

Respective steps may include a step of washing with water.

The anodizing treatment may include, for example, a sulfuric acid process, oxalic acid process, chromic acid process, boric acid process and the like. Of these, the sulfuric acid process is preferable in that a coating film showing good properties in rigidity and corrosion resistance can be formed. The step ③ is preferable in that a coating film showing good finish appearance can be obtained.

In the case of the anodized aluminum material, an anionic electrodeposition coating may particularly be carried out in that the aluminum material may show good properties in durability and finish appearance.

The oxidizing treatment of the aluminum material in the second invention may include any surface treatments known in the art, specifically a chemical surface treatment, anodizing treatment and the like.

The chemical surface treatment may be carried out by the following steps (1) to (3):
(1) pretreatment: aluminum material-mechanical polishing-degreasing (acid, acid salt, alkali, alkali salt, organic solvent, surface active agent, electrodegreasing, etc.) - washing with water (including neutralization) - chemical polishing - washing with water;
(2) chemical surface treatment: A surface treating agent used in the chemical surface treatment may include, for example, a phosphate based treating agent (albond method, zinc phosphate, iron phosphate, manganese phosphate), alcohol phosphate based treating agent, phosphate chromate based treating agent, sodium carbonate based treating agent, chromate based treating agent (chromate, bichromate), vamite process (treatment by use of a steam at 120 to 150°C, treatment by distilled water at 100°C, treatment by an amine-containing distilled water at 100°C), titanium based surface treating agent, fluorine based surface treating agent, and the like.
   Of these, the treatment by use of the zinc phosphate treating agent is preferable, which treating agent is such that a compound such as phosphoric acid, zinc acid phosphate, potassium fluoride and the like is used as a starting material, that the treating agent is brought into contact with the aluminum material so that etching of the aluminum may take place and the eluted aluminum may be reacted with phosphoric acid and fluoric acid to form an aluminum salt, and that the zinc acid phosphate (zinc 2-hydrogen phosphate) may be reacted with aluminum and fluoric acid to form zinc 3-hydrogen phosphate, which deposits on the surface of the aluminum material to form a film.
(3) post-treatment: washing with water - drying.

A coloring method in the chemical surface treatment may include, for example, a method of coloring by a treating solution used in the chemical surface treatment, a method of coloring by adding a metal salt to the treating solution, a method of coloring by a complex compound of potassium permanganate, cobalt, copper, potassium ferrocyanide, iron and the like, alizarium coloring agent, and the like.

In the case of the chemical surface-treated aluminum material, a cationic electrodeposition coating and an anionic electrodeposition coating can be carried out, but the cationic electrodeposition coating is preferably carried out in that the oxidized aluminum material shows good properties in durability and finish appearance.

The anodizing treatment may be carried out by the following steps ① to ③:
- ①: degreasing - alkali etching - desmat - anodizing treatment - sealing treatment,
- ②: degreasing - alkali etching - desmat - anodizing treatment - secondary electrolytic coloring,
- ③: degreasing - polishing (electropolishing, chemical polishing, matte finish, etc.) - anodizing treatment - (optionally dying).

Respective steps may include a step of washing with water.

The anodizing treatment may include, for example, a sulfuric acid process, oxalic acid process, chromic acid process, boric acid process and the like. Of these, the sulfuric acid process is preferable in that a coating film showing good properties in rigidity and corrosion resistance can be formed. The step ③ is preferable in that a coating film showing good finish appearance can be obtained.

In the case of the anodized aluminum material, an anionic electrodeposition coating may particularly be carried out in that the aluminum material may show good properties in durability and finish appearance.

The anodized film may optionally be colored by a natural color development and an electrolytic coloring. A colored film-formed colored anodized aluminum material may be used. Coloring of the film by the natural color development and electrolytic coloring may be carried out by the coloring technique known in the art. A film-forming method by the electrolytic coloring may include a method which comprises carrying out an anodizing treatment, followed by carrying out a secondary electrolysis in an electrolyte containing a metal salt, for coloring, or a method which comprises adding a metal salt into an electrolyte for anodizing, followed by carrying out an anodizing treatment and coloring simultaneously. The metal salt may include, for example, nickel salt, copper salt, tin salt, cobalt salt, lead salt, manganese salt, gold salt, silver salt, molybdenum salt, selenium salt and the like. The salt may include a salt of an inorganic acid such as sulfuric acid, a salt of an organic acid such as acetic acid, and a salt of an oxyacid, and the like.

The surface treating agent may also include an etching agent (inorganic acid, organic acid, salts thereof), heavy metals (Zr, Mo, W, Ti, Mn, Zn, Ni, etc.), salts thereof (nitric acid, phosphoric acid, hydrofluoric acid, etc.), and a surface treating agent using organic and/or inorganic weakly basic or weakly acidic substances prepared optionally by adding a binder (phenol resin, carboxylized polyolefin based resin, etc.), anticorrosive agent (vanadate, organosulfonic acid, gallic acid based compound, sulfide, triazinethiol, benzotriazole, thiocarbonyl compound, etc.), adhesion-imparting agent (silane coupling agent, silica gel, aerosil, etc.) and the like.

The steel material used in combination with the aluminum material or the oxidized aluminum material may include a steel plate used in the automobile as known in the art, specifically a steel plate such as a steel plate, molten zinc-plated steel plate, zinc electroplated steel plate and the like, a treated steel plate subjected to a surface treatment such as a zinc phosphate treatment, iron phosphate treatment and the like. In the case where the steel plate is used, the cationic electrodeposition coating may preferably be carried out in that a coating film showing good properties in corrosion resistance, fabricating properties, finish properties, and the like can be formed.

In the present invention, formation of a heat-curable electrodeposition coating film and the following heat-curing may be carried out by use of a cationic electrodeposition coating composition or an anionic electrodeposition coating composition as follows.

The cationic electrodeposition coating composition may include a known cationic electrodeposition coating composition prepared by mixing a cationic resin composition with water for dispersing. The cationic resin composition may preferably include, for example, a composition containing a base resin having hydroxyl group and a cationic group, and a crosslinking agent such as a blocked polyisocyanate compound. The base resin may include, for example, a reaction product of an epoxy resin with a cationizing agent, one prepared by protonizing a polycondensation product (see USP No. 2450940) of polycarboxylic acid with a polyamine, with an acid, one prepared by protonizing a polyadduct of polyisocyanate compound and polyol, and mono or poly-amine with an acid, one prepared by protonizing a copolymer of hydroxyl group and amino group-containing acrylic or vinyl monomers with an acid (see Japanese Patent Publication No. 12395/70, Japanese Patent Publication No. 12396/70), one prepared by protonizing an adduct of a polycarboxylic acid resin and an alkyleneimine with an acid (see USP No. 3903088), and the like.

The cationic electrodeposition coating composition may also be obtained by neutralizing the cationic resin with an acid neutralizing agent such as acetic acid, hydroxyacetic acid and the like, followed by dispersing into water.

The anionic electrodeposition coating composition may include an acrylic resin anionic electrodeposition coating composition, polyester resin anionic electrodeposition coating composition and the like.

The acrylic resin anionic electrodeposition coating composition may include, for example, one prepared by adding a curing agent such as a blocked polyisocyanate, melamine resin, urea resin and the like to a hydroxyl group and carboxyl group-containing acrylic resin, followed by neutralizing with a basic compound such as amine, and dispersing into water.

The acrylic resin may be obtained by subjecting a monomer mixture of a hydroxyl group-containing (meth)acrylic monomer, α,β-ethylenically unsaturated carboxylic acid, and optionally other radically copolymerizable monomer to a radical copolymerization reaction. The radical copolymerization reaction may be carried out by the known method, for example, a solution polymerization method. The α,β-ethylenically unsaturated carboxylic acid may include, for example, (meth)acrylic acid, maleic acid and the like. The hydroxyl group-containing (meth)acrylic monomer and other radically copolymerizable monomer may include the same ones as above.

The acrylic resin usually has a hydroxy value in the range of 10 to 300 mg KOH/g, preferably 20 to 200 mg KOH/g, an acid value in the range of 20 to 200 mg KOH/g, preferably 30 to 100 mg KOH/g, and a number average molecular weight in the range of 2,000 to 100,000, preferably 3,000 to 50,000.

A mixing ratio of the base resin to the curing agent is such that the curing agent is in the range of 30 to 100 parts by weight, preferably 40 to 80 parts by weight per 100 parts by weight of the base resin.
The cationic and anionic electrodeposition coating compositions may contain, in addition to the above-mentioned component, optionally a surface active agent, surface-controlling agent, curing agent, ultraviolet light absorber, ultraviolet light stabilizer, coloring agent and other additives.

The cationic electrodeposition coating composition is controlled so that the solid content may be in the range of about 5 to 40% by weight, and that the pH may be in the range of 5 to 9.

The anionic electrodeposition coating composition is controlled so that the solid content may be in the range of about 5 to 25% by weight, and that the pH may be in the range of 7 to 10.

An electrodeposition coating by use of the anionic or cationic electrodeposition coating composition may be carried out by energizing between an electrical pole and a coating substrate in an electrodeposition bath containing the electrodeposition coating composition under the conditions of a bath temperature of 15 to 35°C and a loading voltage of 100 to 400 V.

After the completion of the above electrodeposition coating, optionally washing with a water such as an ultrafiltration filtrate (UF filtrate), RO permeated water, industrial water, deionized water and the like may be carried out so that the electrodeposition coating composition in an excess amount may not remain on the surface of a coating product.

The predrying of the electrodeposition coating film may be carried out to such an extent that coating film drawbacks such as bubbling, sagging, pinholes and the like may not develop during heat-curing thereof along with an intercoat coating film, specifically by drying at a surface temperature of a coating substrate in the range of 10 to 80°C for one minute to 60 minutes, preferably 2 minutes to 30 minutes.

The electrodeposition coating film may be heat-cured at a surface temperature of a coating substrate of 110 to 200°C, preferably 140 to 180°C, for 10 to 180 minutes, preferably 20 to 50 minutes.

In the first embodiment of the first invention, a heat-curable water based intercoat coating composition or a heat-curable powder intercoat coating composition may be coated onto the electrodeposition coating film so as to improve smoothness, definition properties, interlayer adhesion properties, anti-chipping properties and the like.

The intercoat coating composition may include ones known in the art, for example, ones prepared by mixing a base resin such as acrylic resin, polyester resin, alkyd resin and the like, a curing agent such as melamine resin, blocked polyisocyanate compound, polyhydrazide compound, polyepoxide, polycarboxylic acid (or anhydride thereof), hydroxyalkylamide compound and the like, a color pigment, an extender pigment, and the like. The water based intercoat coating composition may be coated by air spray coating, airless spray coating, electrostatic coating and the like so as to be a cured film thickness in the range of 10 to 40 µm. The powder intercoat coating composition may be coated by an electrostatic spray coating such as a corona discharge coating, frictional electrification coating and the like, so as to be a cured film thickness in the range of 30 to 80 µm.

The predrying of the water based intercoat coating film may be carried out to such an extent that coating film drawbacks such as bubbling, sagging, pinholes and the like may not develop during heat-curing thereof along with an electrodeposition coating film and a topcoat coating film, specifically by drying at a surface temperature of a coating substrate in the range of 10 to 80°C for one minute to 60 minutes, preferably 2 minutes to 30 minutes.

The water based intercoat coating film may be heat-cured at a surface temperature of a coating substrate of 110°C to 200°C, preferably 140 to 180°C for 10 to 180 minutes, preferably 20 to 50 minutes.

The predrying of the powder intercoat coating film may be carried out to such an extent powder particles may not weld together so as not to fall off while being transported by a conveyor or so, and that imigration of the electrodeposition coating composition and the topcoat coating composition may not take place so as not to adversely effect on coating film appearance and coating film performances, specifically by drying at a surface temperature of a coating substrate in the range of 40 to 100°C for one minute to 60 minutes, preferably 2 minutes to 30 minutes.

The powder intercoat coating film may be heat-cured at a surface temperature of a coating substrate of 140 to 200°C, preferably 150 to 180°C, for 10 to 180 minutes, preferably 20 to 50 minutes.

The heat-curable topcoat coating composition to be coated onto the intercoat coating film may include ones imparting a fine appearance to the coating substrate, specifically may include any coating compositions known in the art and capable of forming a coating film showing good properties in finish appearance such as definition properties, smoothness, gloss and the like, weather resistance such as gloss retention properties, color retention properties, chalking resistance and the like, chemical resistance, water resistance, moisture resistance, curing properties and the like, for example, liquid coating compositions such as an organic solvent based, water based, powder coating composition, water dispersion based, non-water dispersion type and the like prepared by dissolving or dispersing into water or an organic solvent a heat-curable resin composition, as a vehicle main component, containing a base resin such as acrylic resin, polyester resin, silicone resin, fluorocarbon resin, alkyd resin and the like, and a curing agent such as melamine resin, blocked polyisocyanate compound, polyhydrazide compound, polyepoxide, polycarboxylic acid (or anhydride thereof), hydroxyalkylamide compound and the like, and a powder coating composition. Of these, a heat-curable topcoat coating composition containing a heat-curable resin composition, as the vehicle main component, such as an amino resin-curing acrylic resin, amino resin-curing alkyd resin, amino resin-curing polyester resin, acid (or anhydride thereof)-curing epoxy group-containing acrylic resin, silicone-curing acrylic resin and the like.

The topcoat coating composition may be classified to an enamel coating composition prepared by adding a pigment such as metallic pigment, pearl pigment, color pigment and the like to the coating composition containing the vehicle main component, and a clear coating composition free of the above pigments.

A method of forming a topcoat coating film by use of the above coating composition may include the following methods ① to ③:
- ①: a method which comprises coating a metallic coating composition containing a metallic pigment, pearl pigment, optionally color pigment, or a solid color coating composition containing a color pigment, followed by heat curing (metallic finish, pearl finish, solid color finish by one coat one bake coating method);
- ②: a method which comprises coating a metallic pigment-containing metallic coating composition, a pearl pigment -containing coating composition or a solid color coating composition, followed by heat curing, coating a clear coating composition, and heat-curing (metallic finish, pearl finish or solid color finish by 2 coats 2 bakes coating method); and
- ③: a method which comprises coating a metallic coating composition, pearl pigment-containing coating composition or a solid color coating composition, followed by coating a clear coating composition, and heat curing both coating films simultaneously (metallic finish, pearl finish or solid color finish).

The above topcoat coating compositions may preferably be coated by a spray coating method, an electrostatic coating method and the like, so as to be a dry film thickness in the range of 25 to 40 µm in the case of the method ①, in the cases of the methods ② and ③, in the range of 10 to 30 µm in the case of the metallic coating composition, pearl pigment-containing coating composition and the solid color coating composition, and in the range of 25 to 50 µm in the case of the clear coating composition. Heating conditions may arbitrarily be selected depending on the vehicle component and are ones of 80 to 170°C, particularly 120 to 150°C, for 10 to 40 minutes.

The clear coating composition may include an actinic ray-curable topcoat coating composition prepared by optionally adding a photopolymerization initiator, photosensitizer, polymerizable diluent and the like to acrylic resin containing a polymerizable functional group such as acryloyl group, methacryloyl group, vinyl group and the like as crosslinkable by light such as ultraviolet light, sunlight and the like, silicone-resin and fluorocarbon resin. A light source used in the actinic ray-curable topcoat coating composition may include, for example, ultrahigh pressure, high pressure, medium pressure or low pressure mercury lamp, chemical lamp, carbon arc lamp, xenone lamp, metal halide lamp, tungsten lamp and the like. An irradiation-dose is usually in the range of 10 to 500 mJ/cm².

In the second embodiment of the first invention, a water based chipping primer coating composition may be coated onto the electrodeposition coating film for the purpose of improving smoothness, definition properties, interlayer adhesion properties, anti-chipping properties and the like.

The term "a water based chipping primer coating composition" may not conventionally be used, but in the present invention, a water based coating composition having the above-mentioned characteristic values and capable of forming a coating film achievable the purpose of the present invention may be called as "a water based chipping primer coating composition".

The chipping primer coating composition is characterized by being coated onto the surface of an electrodeposition coating film prior to coating an intercoat coating composition in the coating steps of coating the electrodeposition coating composition onto the steel material, followed by coating the intercoat coating composition, and coating the topcoat coating composition, resulting in making it possible to obtain a coating film showing excellent properties in anti-chipping properties, corrosion resistance; physical performances and the like.

A water based chipping primer coating film controlled at a static glass transition temperature in the range of 0 (zero) to -75°C (more preferably as explained later, controlled at a tensile elongation at break at -20°C of the coating film in the range of 200 to 1000% measured at a tensile speed of 20 mm/min.) is more flexible compared with the intercoat coating film used for the purpose of improving anti-chipping properties, resulting in that application of a strong impact force due to collision of rock salt, gravel and the like onto the surface of a multi-layer coating film comprising the water based chipping primer coating film having the above physical properties, the intercoat coating film and topcoat coating film may result that all or almost all of the impact energy may be absorbed into the water based chipping primer coating film without reaching the electrodeposition coating film underneath, and that both the intercoat coating film and topcoat coating film are subjected to almost no physical damage, that is, the water based chipping primer coating film shows a shock-absorbing function against to the impact force from outside, resulting in making it possible remarkably improve anti-chipping properties, to prevent development of rust and corrosion on the steel material due to chipping, and to solve degradation of the topcoat coating film due to collision with rock salt, gravel and the like.

The water based chipping primer coating composition mainly contain a water based vehicle and water, and further optionally contain a viscosity-imparting agent, organic solvent, color pigment, extender pigment, anti-corrosive pigment and the like.

The water based vehicle preferably may include a thermoplastic resin showing good adhesion properties to the electrodeposition coating film and an intercoat coating film, and having a static glass transition temperature in the above-mentioned range, specifically the water based barrier coat as disclosed in Japanese Patent Publication No. 79699/94, (?)which is summarized as follows.

The water based vehicle may include the following ones:
① modified polyolefin based resin:
   For example, a mixture of 1 to 50 parts by weight, preferably 10 to 20 parts by weight of a chlorinated polyolefin, for example, polypropylene having a degree of chlorination in the range of about 1 (one) to 60% by weight, with 100 parts by weight of a propylene-ethylene copolymer (preferably a molar ratio in the range of 40 to 80:60 to 20); a graft polymer obtained by a graft polymerization of 1 to 50 parts by weight, preferably 0.3 to 20 parts by weight of maleic acid or maleic anhydride to 100 parts by weight of the propylene-ethylene copolymer, and the like. These copolymers, chlorinated polyolefin and graft polymer generally has a number average molecular weight in the range of about 5,000 to about 300,000;
② styrene-butadiene copolymer:
   a copolymer having a styrene content of 1 to 50% by weight, preferably 10 to 40% by weight and prepared by optionally adding a functional monomer such as acrylic acid, methacrylic acid and the like to styrene and butadiene, followed by subjecting to an emulsion polymerization in water in the presence of a polymerization catalyst, molecular weight controlling agent, surface active agent and the like. The polymerization temperature is in the range of 100°C or lower. The copolymer preferably has a number average molecular weight in the range of about 10,000 to about 1,000,000;
③ butadiene resin:
   a water-dispersed composition obtained by polymerization in the absence of styrene in the above ②;
④ acrylonitrile-butadiene copolymer:
   a copolymer having an acrylonitrile content of 1 to 50% by weight, preferably 10 to 40% by weight and obtained by optionally adding a functional monomer such as acrylic acid, methacrylic acid and the like to acrylonitrile and butadiene, followed by subjecting to an emulsion polymerization in water in the presence of a polymerization catalyst, molecular weight controlling agent, surface active agent and the like. The polymerization temperature is preferably in the range of 100°C or lower. The copolymer has a number average molecular weight in the range of about 10,000 to about 1,000,000;
⑤ polybutene:
   a polybutene obtained by subjecting a mixture of isobutylene as a main component and normal butylene as an optional component to a low temperature polymerization to obtain a polybutene, followed by heating the polybutene at 50 to 70°C in the presence of an emulsifying agent, and adding water while sufficiently stirring. The resulting resin preferably has a number average molecular weight in the range of about 1,000 to about 500,000;
⑥ acrylic resin:
   an acrylic resin prepared by subjecting a vinyl monomer component obtained by mixing acrylate and/or methacrylate as a main component, optionally a functional monomer such as acrylic acid, methacrylic acid, hydroxyethyl acrylate, hydroxypropyl methacrylate and the like, and/or other polymerizable unsaturated monomer to an emulsion polymerization to form a water dispersion; or to a solution polymerization followed by forming an aqueous solution or a water dispersion. The acrylic resin preferably has a number average molecular weight in the range of about 5,000 to 1,000,000;
⑦ a natural rubber latex, methyl methacrylate-butadiene copolymer emulsion, polychloroprene emulsion, polyvinylydone emulsion and the like.

The coating film formed by the water based chipping primer coating composition preferably has a static glass transition temperature (Tg) in the range of 0 to -75°C, preferably -30 to -60°C, more preferably -40 to -55°C. When the Tg is higher than 0°C, a finally formed coating film show poor properties in anti-chipping properties, corrosion resistance, physical performances and the like. On the other hand, when lower than -75°C, a finally formed coating film shows poor properties in water resistance, adhesion properties and the like.

The chipping primer coating composition may also contain an extender pigment, color pigment, anti-corrosion pigment and the like. A mixing amount of these pigments preferably is in the range of 1 to 150 parts by weight per 100 parts by weight (solid content) of the water based vehicle.

The water based chipping primer coating composition may be coated by an air spray coating, airless spray coating, electrostatic coating and the like so as to be a dry film thickness in the range of 1 to 20 µm, preferably 5 to 10 µm.

The predrying of the water based chipping primer coating film may be carried out to such an extent that coating film drawbacks such as bubbling, sagging, pinholes and the like may not develop during heat-curing thereof along with an electrodeposition coating film and an intercoat coating film, specifically by drying at a surface temperature of a coating substrate in the range of 10 to 80°C for 1 to 60 minutes, preferably 2 to 30 minutes.

The water based chipping primer coating composition may be heat-cured at a surface temperature of coating substrate of 80 to 200°C, preferably 100 to 180°C for 10 to 180 minutes, preferably 20 to 50 minutes.

An intercoat coating composition comprising the heat-curable water based coating composition or the heat-curable powder coating composition is coated onto the water based chipping primer coating film for the purpose of improving smoothness, definition properties, interlayer adhesion properties and the like.

The heat-curable topcoat coating composition is coated onto the intercoat coating film formed by coating the intercoat coating composition.

In the third embodiment of the first invention, the water based chipping primer coating composition is coated onto the electrodeposition coating film for the purpose of improving smoothness, definition properties, interlayer adhesion properties, anti-chipping properties and the like.

The topcoat coating composition is coated onto the water based chipping primer coating film formed by coating the water based chipping primer coating composition for the purpose of improving smoothness, definition properties, interlayer adhesion properties and the like.

In the first embodiment of the second invention, a method which comprises coating the heat-curable electrodeposition coating composition onto the surface of the oxidized aluminum material to form an electrodeposition coating film, followed by heat-curing is as above-described.

In the second embodiment of the second invention, formation of the water based intercoat coating film or intercoat powder coating film onto the surface of the oxidized aluminum material, followed by heat-curing, and formation of the topcoat coating film, followed by heat-curing may be carried out by the methods described in the first embodiment of the first invention.

In the third invention, the surface treatment subjected to the aluminum material is the same as that described in the first and second invention.

In the third invention, the oxidizing treatment of the aluminum material is the same as that in the second invention.

The coating method of the third invention, in the case the sole metal base material such as aluminum material, aluminum-coated steel material and the like is used, may include the following methods, for example,
(1) a method which comprises subjecting the metal base material to a press molding into a predetermined part material such as an engine hood, fender panel and the like, followed by assembling to the automobile body, optionally and respectively carrying out the surface treatment, electrodeposition coating, water based chipping primer coating and intercoat coating, and applying the film facing material;
(2) a method which comprises subjecting the metal base material to a press molding into a predetermined part material such as an engine hood, fender panel and the like, optionally and respectively carrying out the surface treatment, electrodeposition coating, chipping primer coating and intercoat coating, and assembling to the automobile body, and applying the film facing material.
In the above assembling, respective coating compositions and coating methods (predrying and heat-curing) may include ones known in the art, for example, may include 4 coats 1 bake (a coating method of formation of a multi-layer coating film comprising wet or predried 3 coats of electrodeposition coating, chipping primer coating, and intercoat coating followed by simultaneous heat-curing, hereinafter referred to the same meaning), 4 coats 2 bakes, 4 coats 3 bakes, 4 coats 4 bakes, 3 coats one bake (3 coats of electrodeposition coating, chipping primer coating, intercoat coating), 3 coats 2 bakes, 3 coats 3 bakes, 2 coats one bake (2 coats of electrodeposition coating and chipping primer coating, 2 coats of electrodeposition coating and intercoat coating or 2 coats of chipping primer coating and intercoat coating), one coat one bake (one coat of electrodeposition coating, chipping primer coating or intercoat coating), and the like.

The coating method of the third invention, in the case where an aluminum material and steel material-combined metal material is used as the base material of the automobile body, may include, for example, a method which comprises subjecting the steel material to a press molding into a predetermined part material such as an engine hood, fender panel and the like, followed by subjecting to a surface treatment, assembling the surface-treated steel part material to the automobile body, respectively subjecting to electrodeposition coating, water based chipping primer coating, intercoat coating and topcoat coating to obtain a topcoat-coated steel part material-assembled automobile body; separately subjecting the aluminum base material to a press molding into a predetermined part material different from the above part material, for example, a bonnet and the like, optionally and respectively followed by subjecting to a surface treatment, electrodeposition coating, chipping primer coating, and intercoat coating, and by applying the film facing material to obtain a film facing material-applied aluminum part material, and assembling the film facing material-applied aluminum part material to the topcoat-coated steel material-assembled automobile body. The application method is not limited to the above method.

The film facing material may include ones known in the art, specifically, for example, an application film prepared by combining a cementing material layer (a), a substrate base material layer (b), a colored film (c) and a clear layer (d).

The cementing material layer (a) is an adhesive layer to apply the substrate base material layer (b) onto a coating substrate such as aluminum material, optionally the electrodeposition coating film, chipping primer coating film, intercoat coating film and the like. The cementing material used in the cementing material layer (a) may include ones known in the art, for example, a heat-curable, cold-curable, actinic ray-curable or thermoplastic adhesive and pressure-sensitive adhesive and the like, which contains a curing agent and at least one resin selected from bisphenol type epoxy resin, resol type epoxy resin, acrylic resin, aminoplast resin, polyester resin, urethane resin, polysiloxane resin, (iso)butylene resin, vinyl acetate resin, vinyl chloride resin, vinyl chloride-vinyl acetate copolymer, synthetic rubber, natural rubber and the like. The cementing may be transparent or colored.

These cementing material may include a pressure-sensitive adhesive, heat-sensitive adhesive, curable type adhesive and the like.

The cementing material layer (a) has a film thickness in the range of 1 to 100 µm, preferably 5 to 80 µm.

The substrate base material layer (b) is a base material layer to make the application operation easy, and examples of the substrate base material may include thermoplastic resins such as polyethylene, polypropylene, polyisobutylene, polybutadiene, polystyrene, polychloroprene, polyvinyl chloride, polyvinyl acetate, nylon, acrylic resin, polycarbonate, cellulose, polyethylene terephthalate, polyacetal, AS resin, ABS resin and the like, aluminum foil, and the like. The substrate base material layer may be transparent or colored.

The substrate base material layer (b) has a film thickness in the range of 10 to 200 µm, preferably 20 to 150 µm.

The colored film (c) may include, for example, a coating film formed by a coating composition prepared by adding a color pigment to the curable resin known in the art, for example, a base coating composition used in the field of the automobile coating composition, and formed by ink and the like.

The curable resin may include, for example, amino-curing resin, (blocked) polyisocyanate-curing resin, acid epoxy-curing resin, hydrolyzable silane-curing resin, hydroxyl group-epoxy group-curing resin, hydrazine-curing resin, oxydation polymerization-curing resin, photo (heat) radical polymerization type resin, photo (heat) cationic polymerization type resin, and curable resins in combination with at least two of the above resins.
The color pigment may include ones known in the art, for example, white pigment such as titanium oxide, zinc oxide, basic lead carbonate, basic sulfate white lead, lead sulfate, lithopone, zinc sulfide, antimonum white, antimony white and the like; black pigment such as carbon black, acetylene black, lamp black, bone black, graphite, iron black, aniline black and the like; yellow pigment such as naphthol yellow S, hansa yellow, pigment yellow L, benzidine yellow, permanent yellow and the like; orange pigment such as chrome orange, chrome vermilion, permanent orange and the like; brown pigment such as iron oxide, amber and the like; red pigment such as red iron oxide, red lead, permanent red, quinacridone and the like; violet pigment such as cobalt blue, fast violet, methylviolet lake and the like; blue pigment such as ultramarine, prussian blue, cobalt blue, phthalocyanine blue, indigo and the like; green pigment such as chrome green, pigment green B, phthalocyanine green, and the like; mica, colored mica, flake aluminum powder and the like.

Kinds of the coating composition by use of the above curable resin may include powder coating composition, non-solvent type coating composition including a non-solvent type coating composition prepared by dissolving or dispersing a crosslinkable or non-crosslinkable resin into a radically polymerizable monomer, a water based coating composition prepared by dissolving or dispersing a curable resin into water, an organic solvent based coating composition prepared by dissolving or dispersing a curable resin into an organic solvent, including a non-water dispersion type coating composition, and the like.

A mixing ratio of the curable resin to the color pigment may arbitrarily be determined depending on uses and finished appearance, but usually is such that the color pigment is in the range of 0.01 to 200 parts by weight, preferably 0.1 to 100 parts by weight per 100 parts by weight (as solid content) of the curable resin.

The colored coating film layer has a film thickness in the range of 1 to 100 µm, particularly 2 to 80 µm. The colored coating film layer may be a monolayer or a multicolor multi-layer film formed by laminating at least two colored layers. The coating film may optionally has a pattern such as letters, pictures, figures, markings and the like, and may also be colored to such an extent that the substrate underneath is visible.

The colored film layer may be formed by a coating method suitable for a kind of the curable coating composition, for example, roller coating, brushing, electrostatic coating, powder coating, electrodeposition coating, air spray coating, airless spray coating, screen printing, gravure printing and the like.

The colored film layer may be cured by a suitable curing method such as irradiation, heating and the like and under suitable curing conditions depending on the kind of the resin composition. For example, curing in the case of the heat-curable resin may be carried out by heating at a temperature in the range of about 100°C to about 170°C for about 10 minutes to about 40 minutes.

The colored film layer (c) may have a film thickness in the range of 1 to 100 µm, preferably 20 to 80 µm.

A clear coating composition may be coated onto the surface of the colored film layer (c) to form a clear layer (d), which may be colored to such an extent that a substrate underneath may be visible. The clear coating composition may include a coating composition prepared by adding a color pigment to the curable resin known in the art, for example, a clear coating composition conventionally used in the field of the automobile coating composition, and a coating composition formed from ink, and the like.

The unable resin may include, for example, amino-curing resin, (blocked) polyisocyanate-curing resin, acid epoxy-curing resin, hydrolyzable silane-curing resin, hydroxyl group-epoxy group-curing resin, hydrazine-curing resin, oxydation polymerization-curing resin, photo (heat) radical polymerization type resin, photo (heat) cationic polymerization type resin, and curable resins in combination with at least two of the above resins. The clear coating composition may be cured by the same coating method and curing conditions as those above described.

The clear layer (d) has a film thickness in the range of 1 to 100 µm, preferably 2 to 80 µm.

The use of a colored substrate base material prepared by adding a color pigment to the substrate base material layer (b) per se makes it possible to exclude the colored film (c).

The film facing material may be applied onto the surface of the substrate by pressing the surface of the cementing material layer (a) onto the surface of the substrate, followed by pressurizing from over the clear layer (d). This application may be carried out directly by hand, by hand using a squeegee, or by use of an automobile application machine.

The transfer film known in the art may also be used as the film facing material of the present invention.

The transfer film may include, for example, a transfer film prepared by laminating an application film layer obtained by laminating a pressure-sensitive cementing material onto the plastic film such as polyethylene terephthalate sheet having a film thickness of 20 to 10 µm, preferably 30 to 80 µm and removed after transferring, the clear layer (d), colored film (c), the pressure-sensitive cementing material layer (a) and a release layer removed after transferring.

The transfer film may be applied by removing the release layer from the transfer film, followed by pressing the surface of the exposed pressure-sensitive cementing material layer (a) onto the surface of the substrate, and by pressurizing from over the application film. After application, the application film is separated from the surface of the clear layer.

In the case where a colored aluminum material obtained by natural color development on electrolytic coloring is used as the aluminum material and the film facing material is transparent, the colored aluminum material is visible through the film facing material, resulting in making it possible to obtain a coating film showing excellent properties in finished appearance as impossible by coating the conventional automobile coating composition. In addition, the use of a color clear layer colored to such an extent that the substrate underneath is visible by transmission results in that an incident light from the surface of the color clear coating film transmits through the color clear coating film, that a light transmitted through the color clear coating film is identified by a person as a reflected light, and that a combination of a color due to the colored aluminum material with a transmitted light due to the color clear coating film makes it possible to develop a particular color. The first embodiment of the first invention makes it possible to form a multi-layer coating film comprising a tri-layer structure suitable for coating of the automobile body simply, economically, in a power-saving way, safely, stably and continuously, and to form a multi-layer coating film showing good properties in finish appearance and coating film performances. The use of the aluminum material having a degree of surface roughness of 0.2 µm or less makes it possible to further improve the finish appearance of the multi-layer coating film comprising tri-layer structure.

The second embodiment of the first invention makes it possible to form a multi-layer coating film comprising four-layer structure suitable for coating the automobile body simply, economically, in a power-saving way, safely, stably and continuously, and to form a multi-layer coating film showing good properties in finish appearance and coating film performances.

In the present invention, application of a strong impact force due to collision of rock salt, gravel and the like onto the surface of a multi-layer coating film comprising the water based chipping primer coating film having the above physical properties, the intercoat coating film and topcoat coating film may result that all or almost all of the impact energy may be absorbed into the water based chipping primer coating film without reaching the electrodeposition coating film underneath, and that both the intercoat coating film and topcoat coating film are subjected to almost no physical damage. That is, the water based chipping primer coating film shows a shock-absorbing function against to the impact force from outside, resulting in making it possible remarkably improve anti-chipping properties, to prevent development of rust and corrosion on the steel material due to chipping, and to solve degradation of the topcoat coating film due to collision with rock salt, gravel and the like.

The use of the aluminum material having a degree of surface roughness of 0.2 µm or less makes it possible to further improve the finish appearance of the multi-layer coating film comprising tri-layer structure.

The third embodiment of the first invention makes it possible to form a multi-layer coating film comprising a four-layer structure suitable for coating of the automobile body simply, economically, in a power-saving way, safely, stably and continuously, and to form a multi-layer coating film showing good properties in finish appearance and coating film performances.
application of a strong impact force due to collision of rock salt, gravel and the like onto the surface of a multi-layer coating film comprising the water based chipping primer coating film having the above physical properties and topcoat coating film may result that all or almost all of the impact energy may be absorbed into the water based chipping primer coating film without reaching the electrodeposition coating film underneath, and that both the intercoat coating film and topcoat coating film are subjected to almost no physical damage, that is, the water based chipping primer coating film shows a shock-absorbing function against to the impact force from outside, resulting in making it possible remarkably improve anti-chipping properties, to prevent development of rust and corrosion on the steel material due to chipping, and to solve degradation of the topcoat coating film due to collision with rock salt, gravel and the like.

The use of the aluminum material having a degree of surface roughness of 0.2 µm or less makes it possible to further improve the finish appearance of the multi-layer coating film comprising tri-layer structure.

The first embodiment of the second invention makes it possible to form an electrodeposition coating film suitable for coating the automobile body simply, economically, in a power-saving way, safely, stably and continuously, and to form an electrodeposition coating film showing good properties in finished appearance and coating film performances.

The use of the oxidized aluminum material having a degree of surface roughness of 0.2 µm or less makes it possible to further improve the finish appearance of the electrodeposition coating film.

The second embodiment of the second invention makes it possible to form an intercoat coating film and a topcoat coating film suitable for coating the automobile body simply, economically, in a power-saving way, safely, stably and continuously, and to form an intercoat coating film and a topcoat coating film showing good properties in finished appearance and coating film performances. The use of the oxidized aluminum material having a degree of surface roughness of 0.2 µm or less makes it possible to further improve the finish appearance of the intercoat coating film and topcoat coating film.

The film facing material of the third invention provides the following effects ① to ⑦:
- ①: A coating film showing good finish appearance and having a pearl gloss can be obtained;
- ②: The film facing material having the substrate base material layer is such that on collision of external objects such as rock salt, gravel and the like to the surface of the film, the substrate base material layer absorbs an impact energy from the surface, resulting in making it possible to obtain a coating film showing good properties in durability without any coating film drawbacks such as cracks, peeling off and the like in spite of hard surface, and making it possible to maintain the film performances for a long period of time;
- ③: The film surface formed from a cured resin shows a high hardness, good properties in chemical resistance, pollution resistance, sanding resistance;
- ④: Application of the film facing material is easy, and provides good finish appearance without producing drawbacks such as wrinkles and the like;
- ⑤: There is no need of coating the melamine-curing resin coating composition, isocyanate-curing resin coating composition, acid-curing resin coating composition and the like directly onto the base material, a suitable method can be selected beforehand depending on coating purpose, for example, coating methods, coating film performances, finish appearance and the like. Further effects can be provided, for example, coating film drawbacks due to coating is controlled, coating composition is not consumed in excess amount, working environments, health and safety control are improved, and used coating can be recovered without environmental pollution;
- ⑥: The use of the aluminum material having a degree of surface roughness of 0.2 µm or less can improve finish appearance;
- ⑦: The use of a colored aluminum material colored by natural color development and electrolytic coloring makes it possible to provide an automobile body showing metallic feeling and fine finish appearance as impossible in the case of the conventional automobile coating composition.

### Example

The present invention is explained more in detail by the following Examples and Comparative Examples, in which "part" and "%" represent "part by weight" and "% by weight" respectively. The present invention is not limited to the Examples.

### Example 1

A 0.8 mm thick aluminum plate material (JIS A6061) was subjected to a degreasing washing, followed by subjecting to a surface treatment with a zinc phosphate based treating agent, coating a cationic electrodeposition coating composition Elecron GT-10 (blocked polyisocyanate-curing epoxy resin electrodeposition coating composition, trade name, marketed by Kansai Paint Co., Ltd.), heat-curing at 170°C for 20 minutes so as to obtain an electrodeposition coating plate having a dry coating film thickness of about 20 µm, spray coating the following heat-curable water based intercoat coating composition so as to be a film thickness of 30 µm, heat-curing at 140°C for 20 minutes, spray coating a heat-curable topcoat coating composition (Neoamilac #6000 white, trade name, marketed by Kansai Paint Co., Ltd. organic solvent based) so as to be a dry film thickness of about 80 µm, and heat-curing at 140°C for 20 minutes to obtain respective test coating plate.

### Examples 2-26

Respective test coating plates of Examples 2-26 were prepared by the methods as described in Tables 1 and 2.

### Examples 27-38

A 0.8 mm thick aluminum plate material (JIS A6061) was subjected to a degreasing washing, followed by subjecting to a surface treatment with a zinc phosphate treating agent to obtain a surface-treated aluminum material, separately a zinc-iron alloy molten zinc-plated steel plate was subjected to a surface treatment with a zinc phosphate treating agent, coating a following cationic electrodeposition coating composition so as to be a film thickness of 20 µm, washing with water, heat-curing at 170°C for 20 minutes to obtain an electrodeposition coating-treated steel plate, welding the surface-treated aluminum material and the coating-treated steel plate so that both coating surfaces are in the same side, subjecting both aluminum plate material and steel plate material to coating under the coating conditions as described in Tables 1 and 2.

In Tables 1 and 2, the anodized treatment was carried out as follows.

A 0.8 mm thick aluminum plate material (JIS A6061) was subjected to a pretreatment, followed by subjecting to an anodizing treatment in a 150 g/· aqueous sulfuric acid solution at 20°C and a current density of 120 A/m² for 30 minutes to form an anodized film to be used.

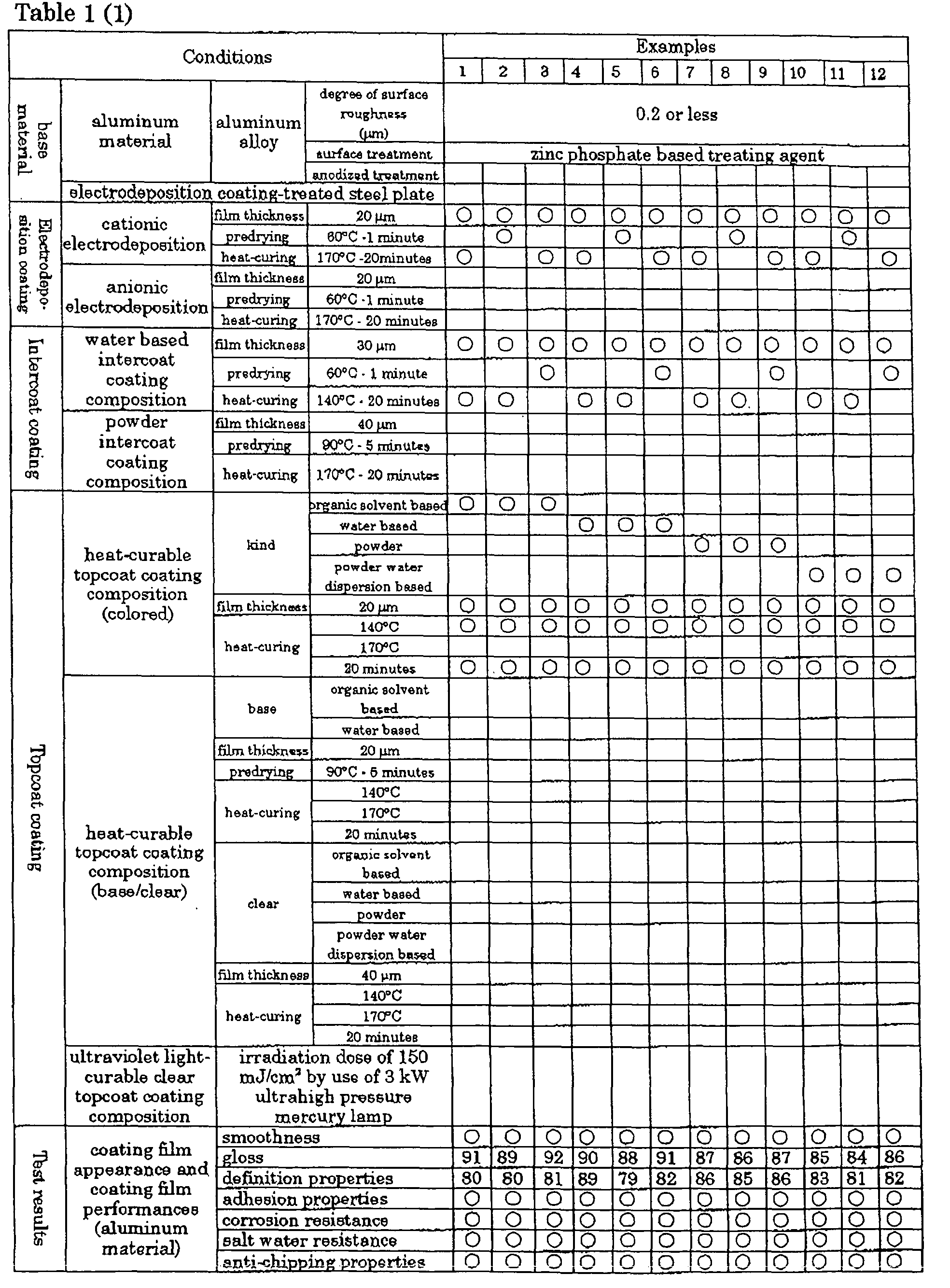

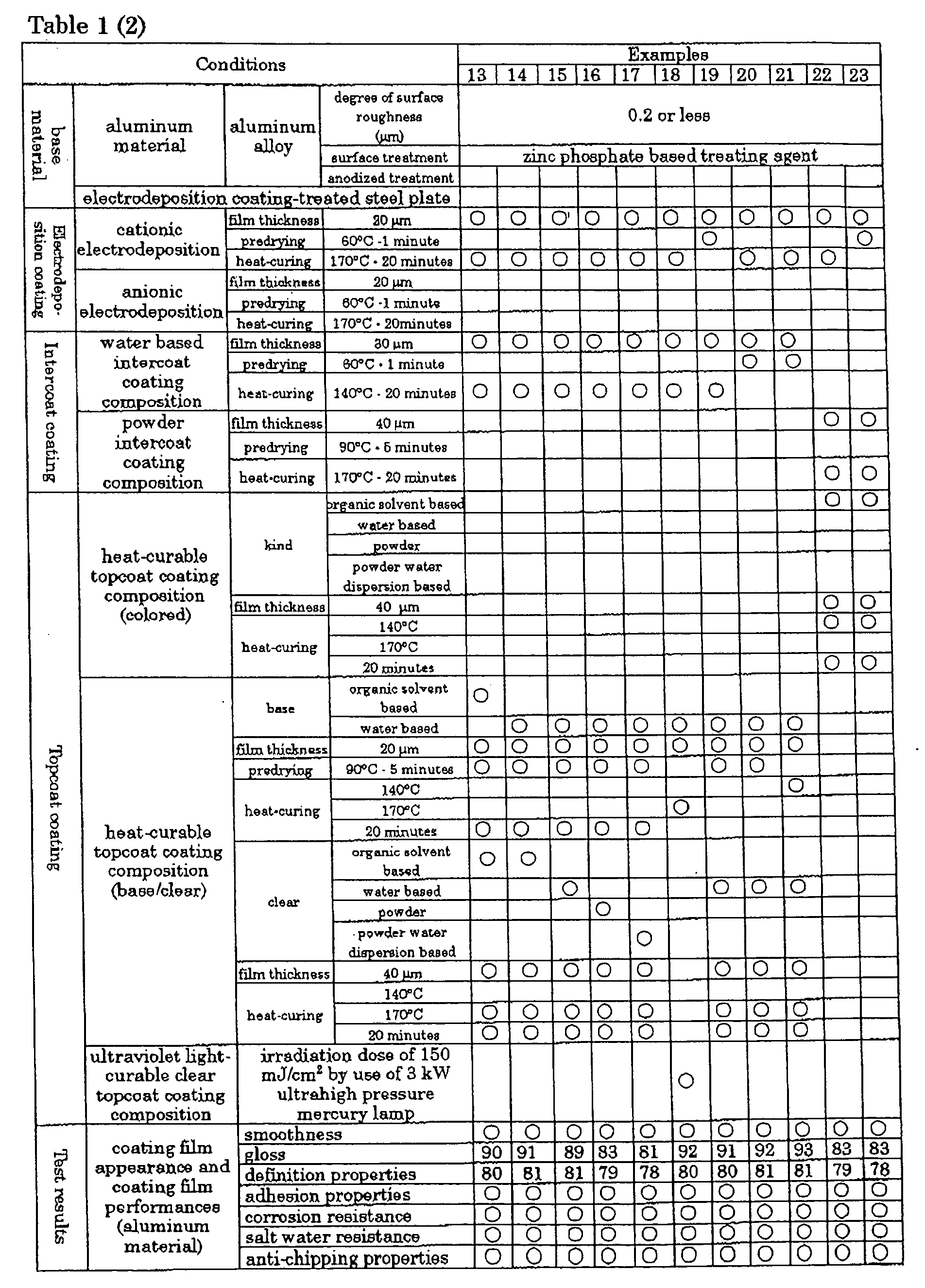

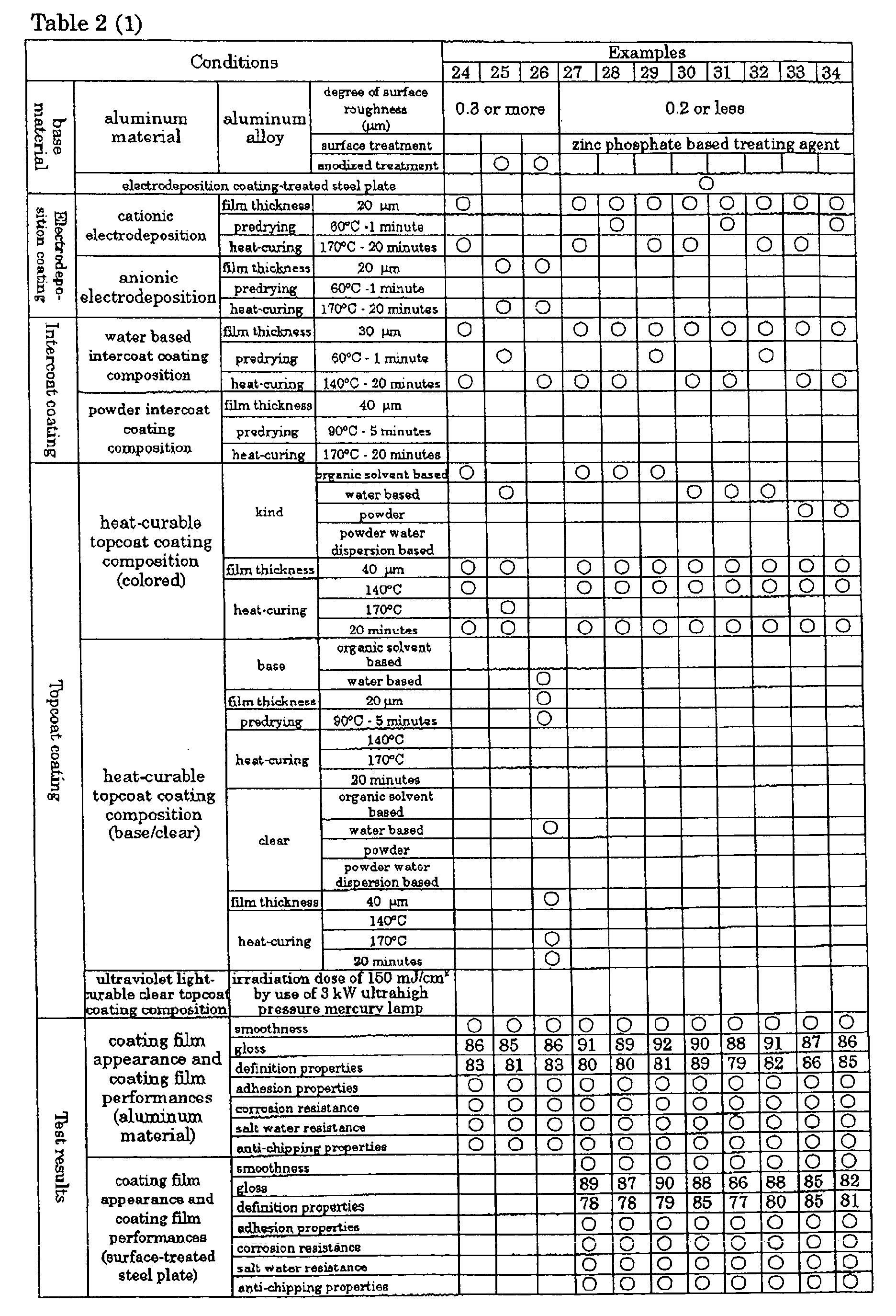

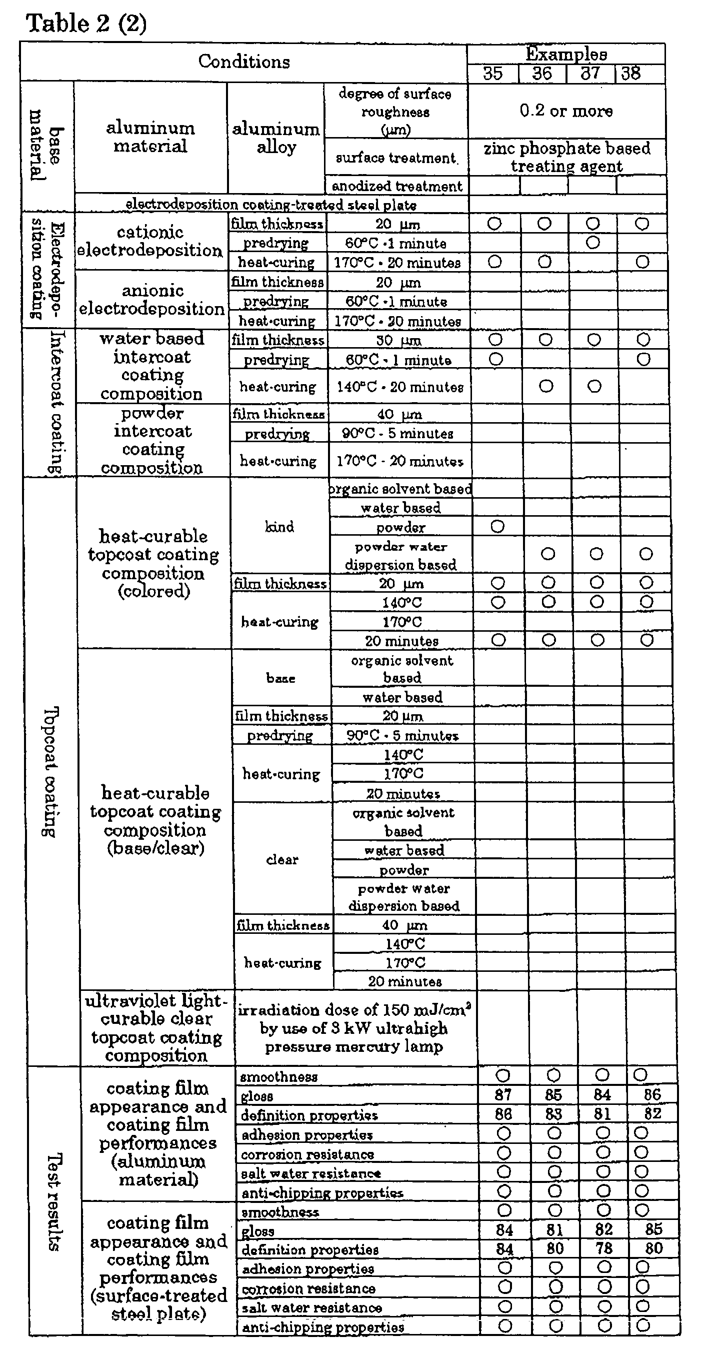

### Comparative Examples 1-2

Respective coating plates of Comparative Examples 1-2 were prepared in the same manner as described in Table 1.

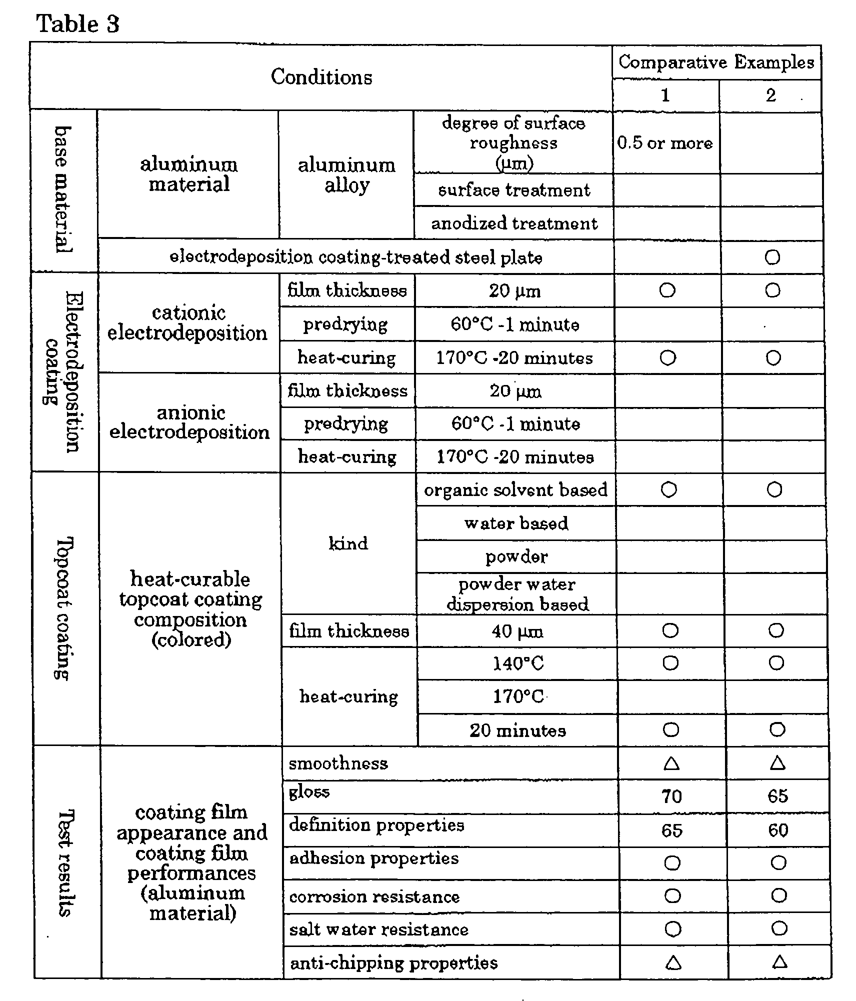

Electrodeposition coating in Tables 1, 2 and 3 represents an electrodeposition coating method and conditions as applied to the aluminum material.

In Tables 1, 2 and 3, base material, coating composition and test method as described as follows.
Surface-treated steel plate:
   A zinc iron alloy or zinc-plated steel plate was subjected to a surface treatment with a zinc phosphate treating agent.
Cationic electrodeposition coating composition:
   Elecron GT-10 (trade name, marketed by Kansai Paint Co., Ltd., blocked polyisocyanate-curing epoxypolyamine based resin, electrodeposition coating composition).
Anionic electrodeposition coating composition:
   Elecron AG210 (trade name, marketed by Kansai Paint Co., Ltd., melamine-curing acrylic resin electrodeposition coating composition).
Water based intercoat coating composition:
   A mixture of 1000 parts (as solid content, and so forth) of polyester resin (a polyester resin prepared by introducing into a reactor a mixture of 756 parts of neopentyl glycol, 109 parts of trimethylolpropane, 370 parts of hexahydrophthalic acid, 292 parts of adipic acid and 398 parts of isophthalic acid, followed by reacting at 220°C for 6 hours, adding 45 parts of trimellitic anhydride, reacting at 170°C for 30 minutes to obtain a polyester resin having a number average molecular weight of about 8,000, an acid value of 20 mg KOH/g, and a hydroxy value of 95 mg KOH/g), 40 parts of dimethylaminoethanol, 410 parts of a curing agent prepared by blocking trimer adduct of hexamethylene diisocyanate methylethylketoxime, 1400 parts of titanium white pigment (Tayca JR806, trade name, marketed by Tayca Corporation) and 2 parts of carbon black (Mitsubishi Carbon Black M-100 (trade name, marketed by Mitsubishi Chemical Corporation) was mixed and dispersed into 1800 parts of deionized water to obtain a water-based intercoat coating composition.
Powder intercoat coating composition:
   Everclad 4000 White (trade name, marketed by Kansai Paint Co., Ltd., heat-curable polyester powder coating composition).
Heat-curable topcoat colored coating composition:
   Organic solvent based Neoamilac #6000 White (trade name, marketed by Kansai Paint Co., Ltd., organic solvent based, acrylic melamine curing based).
Water based:
   A mixture of 55 parts of titanium white and 2 parts of carbon black was added to a mixture of 140 parts of an acrylic resin neutralized solution (Note 1) having a solid content of 50%, and 34 parts of Cymel (trade name, marketed by Mitsui Cytec Ltd., 88% water-soluble melamine resin solution), followed by dispersing and controlling a solid content at 35% with deionized water to obtain a heat-curable water based colored coating composition.
      (Note 1): A mixture of 30 parts of methyl methacrylate, 23 parts of ethyl acrylate, 30 parts of butyl acrylate, 12 parts of hydroxyethyl methacrylate and 5 parts of acrylic acid was subjected to obtain an acrylic resin solution (solid content 60%) having an acid value of 40, a hydroxy value of 52 and a number average molecular weight of about 10000, followed by adding dimethylaminoethanol and neutralizing, and diluting with isopropyl alcohol so as to a solid content of 50% to obtain an acrylic resin neutralized solution.
Powder based:
   Everclad 5000 White (trade name, marketed by Kansai Paint Co., Ltd., heat-curable acrylic resin powder coating composition).
Powder water dispersion based:
   A mixture prepared by adding 100 parts of a coating composition solution (A) to an aqueous polymer solution comprising 29 parts of 30% suspension-stabilizing agent water-soluble acrylic resin aqueous solution (A) and 88 parts of ion exchange water was mixed by use of a homogenizer at 14000 rpm to obtain a suspension, diluting with 45 parts of deionized water, introducing into a reactor equipped with a stirring apparatus, a temperature controller, reflux tube, and a vacuum apparatus, heating up to 55°C, controlling at 120 mmHg, carrying out desolvation until a heating residue becomes 32%, filtering with a 200 mesh silk cloth, removing agglomerates, adding 2.0 parts of a polymerizable urethane based thickening agent PUR-60 (trade name, marketed by Huls A.G.) to obtain a powder water dispersion based coating composition.
Aqueous solution (A):
   A reaction product of a mixture of 65 parts of n-butanol, 20 parts of polyethylene oxide (45 mer), 10 parts of hydroxyethyl acrylate, 15 parts of acrylic acid, 25 parts of methyl methacrylate, 20 parts of n-butyl methacrylate and 10 parts of styrene was neutralized with dimethylethanolamine at 0.7 equivalent, adding deionized water and diluting to be a resin content of 30% by weight.
Coating composition (B) :
   A mixture of 100 parts of titanium white and 50 parts of blocked NCO curing agent B-1530 (trade name, marketed by Huls A.G., ε-caprolactam IPDI isocyanurate) was added to a radical polymerization reaction product resin solution of a mixture of 25 parts of hydroxyethyl methacrylate, 30 parts of styrene, 20 parts of butyl methacrylate, and 25 parts of iso-butyl methacrylate to obtain a coating composition.
Heat-curable topcoat coating composition (for 2 coats):
Base coating composition:
Organic solvent based:
   A mixture of 75 parts of hydroxyl group-containing acrylic resin (number average molecular weight 15000, hydroxy value 50, acid value 4), 25 parts (solid content) of methyl·butyl mixed etherified melamine resin (U-Van: 20SE, trade name, marketed by Mitsui Toatsu Chemicals, Inc.) and 25 parts of Alumipaste 891K (trade name, marketed by Toyo Aluminum K.K.) was mixed with a mixed solvent comprising ethyl acetate to toluene = 50 to 50 (weight ratio) for dispersing so that a solid content may be 40% on coating.
Water based:
   A mixture of 100 parts of the 50% solid content acrylic resin neutralized solution (above Note 1), 100 parts of a 50% solid content polyester resin neutralized solution (Note 2), 500 parts of a 20% solid content acrylic emulsion (Note 3) and 38 parts of Cymel 370 (above trade name) was prepared, followed by adding 25 parts of Alumipaste 891K (trade name, marketed by Toyo Aluminum K.K.), and mixing to obtain a heat-curable water based metallic coating composition.
      (Note 2) A mixture of 0.7 mole of neopentyl glycol, 0.3 mole of trimethylolpropane, 0.4 mole of phthalic anhydride and 0.5 mole of adipic acid was subjected to an esterification reaction, followed by adding 0.03 mole of trimellitic anhydride and reacting, adding butyl cellosolve to obtain a polyester resin solution (solid content 70%) having an acid value of 40 and a number average molecular weight of about 6000, adding dimethyl aminoethanol and neutralizing, and diluting with isopropyl alcohol so as to a solid content of 50% to obtain a polyester resin neutralized solution.
      (Note 3) A reactor was charged with 140 parts of deionized water, 2.5 parts of Newcol 707SF (trade name, marketed by Nippon Newkazai Co., Ltd., surface active agent) and one part of a monomer mixture A of 55 parts of methyl methacrylate, 8 parts of styrene, 9 parts of butyl acrylate, 5 parts of hydroxyethyl acrylate, 2 parts of 1,6-hexanediol diacrylate and one part of methacrylic acid, followed by mixing with agitation under nitrogen gas atmosphere, heating at 60°C, adding 3 parts of 3% ammonium persulfate aqueous solution, heating up to 80°C, adding a monomer emulsion comprising 79 parts of the monomer mixture A, 2.5 parts of Newcol 707SF (trade name as above), 4 parts of 3% ammonium persulfate aqueous solution and 2 parts of deionized water over 4 hours, aging for one hour, dropping at 80°C 20.5 parts of a monomer mixture B of 5 parts of methyl methacrylate, 7 parts of butyl acrylate, 5 parts of 2-ethyl hexyl acrylate, 3 parts of methacrylic acid and 0.5 part of Newcol 707SF (trade name as above), and 4 parts of 3% ammonium persulfate aqueous solution simultaneously over 1.5 hours, aging for one hour, diluting with 30 parts of deionized water, adding deionized water to the resulting filtrate, controlling pH at 7.5 with dimethylaminoethanol to obtain a 20% solid content acrylic emulsion.
Clear coating composition:
Organic solvent based:
   A mixture of 57 parts of acrylic resin solution (Note 4), 50 parts of acrylic resin non-water dispersion (Note 5), 30 parts of Cymel 303 (trade name, marketed by Mitsui Cytec Co., Ltd., monomeric melamine resin), 4 parts of 25% dodecylbenzenesulfonic acid solution and 0.5 part of BYK-300 (trade name, marketed by BYK-Chemie Japan K.K., surface controlling agent) was diluted with Swasol #1000 (trade name, marketed by Cosmo Oil Co., Ltd., aromatic hydrocarbon based solvent) to obtain a 55% solid content clear coating composition.
      (Note 4) A reactor was charged with 40 parts of Swasol #1000 (trade name as above), followed by heating at 120°C, adding a monomer mixture of 30 parts of styrene, 35 parts of butyl acrylate, 10 parts of 2-ethylhexyl acrylate, 25 parts of hydroxyethyl acrylate and 4 parts of α,α'-azobisisobutylonitrile over 3 hours and polymerizing to obtain an acrylic resin solution (solid content 70%) having a hydroxy value of 120 and a number average molecular weight of 6000.
      (Note 5) A reactor was charged with 58 parts of U-Van 28-60 (trade name, marketed by Mitsui Chemicals, Inc., 60% melamine resin solution), 30 parts of n-heptane and 0.15 part of benzoylperoxide, heating at 95°C, dropping over 3 hours a mixture of 15 parts of styrene, 9 parts of acrylonitrile, 13 parts of methyl methacrylate, 15 parts of methyl acrylate, 1.8 parts of butyl acrylate, 10 parts of hydroxyethyl methacrylate, 1.2 parts of acrylic acid, 0.5 part of benzoyl peroxide, 5 parts of n-butanol, 30 parts of Shellsol 140 (trade name, marketed by Showa Shell Sekiyu K.K.) and 9 parts of n-heptane, aging for one hour, dropping 0.65 part of t-butylperoctoate and 3.5 part of Shellsol 140 (trade name as above) over one hour, stirring at 95°C for 2 hours, vacuuming and removing solvent to obtain an acrylic resin non-water dispersion having a solid content of 60%, and a varnish viscosity A (Gardner bubble viscometer).
Water based:
   A mixture of 140 parts of the 50% solid content acrylic resin neutralized solution (Note 1 as above) and 34 parts of Cymel 370 (trade name, marketed by Mitsui Cytec Co., Ltd., 88% water-soluble melamine resin solution) was dispersed, followed by controlling a solid content of 35% by adding deionized water to obtain a heat-curable water based clear coating composition.
Powder based:
   Everclad 5000 Clear (trade name, marketed by Kansai Paint Co., Ltd. heat-curable acrylic resin powder coating composition).
Powder water dispersion based:
   A clear coating composition is prepared by excluding the titanium white in the powder water dispersion coating composition used in the above heat-curable topcoat colored coating composition.

### Example 39

A 0.8 mm thick aluminum plate material (JIS A6061) was subjected to a degreasing washing, followed by subjecting to a surface treatment with a zinc phosphate based treating agent, coating a cationic electrodeposition coating composition Elecron GT-10 (blocked polyisocyanate curing epoxy resin electrodeposition coating composition, trade name, marketed by Kansai Paint Co., Ltd.), heat-curing at 170°C for 20 minutes so as to obtain an electrodeposition coating plate having a dry coating film thickness of about 20 µm, spray coating the following water based chipping primer coating composition so as to be a dry film thickness of about 6 µm, heat curing at 100°C for 20 minutes, spray coating the following heat-curable water based intercoat coating composition so as to be a film thickness of 30 µm, heat-curing at 140°C for 20 minutes, spray coating a heat-curable topcoat coating composition (Neoamilac #6000 White, trade name, marketed by Kansai Paint Co., Ltd. organic solvent based) so as to be a dry film thickness of about 80 µm, and heat-curing at 140°C for 20 minutes to obtain respective test coating plate.

### Examples 40-64

Respective test coating plates of Examples 40-64 were prepared in the manners as described in Tables 4 and 5.

### Examples 65-76

A 0.8 mm thick aluminum plate material (JIS A6061) was subjected to a degreasing washing, followed by subjecting to a surface treatment with a zinc phosphate treating agent to obtain a surface-treated aluminum material, separately a zinc-iron alloy molten zinc-plated steel plate was subjected to a surface treatment with a zinc phosphate treating agent, coating a following cationic electrodeposition coating composition so as to be a film thickness of 20 µm, washing with water, heat-curing at 170°C for 20 minutes to obtain an electrodeposition coating-treated steel plate, welding the surface-treated aluminum material and the coating-treated steel plate so that both coating surfaces are in the same side, subjecting both aluminum plate material and steel plate material to coating under the coating conditions as described in Tables 1 and 2.

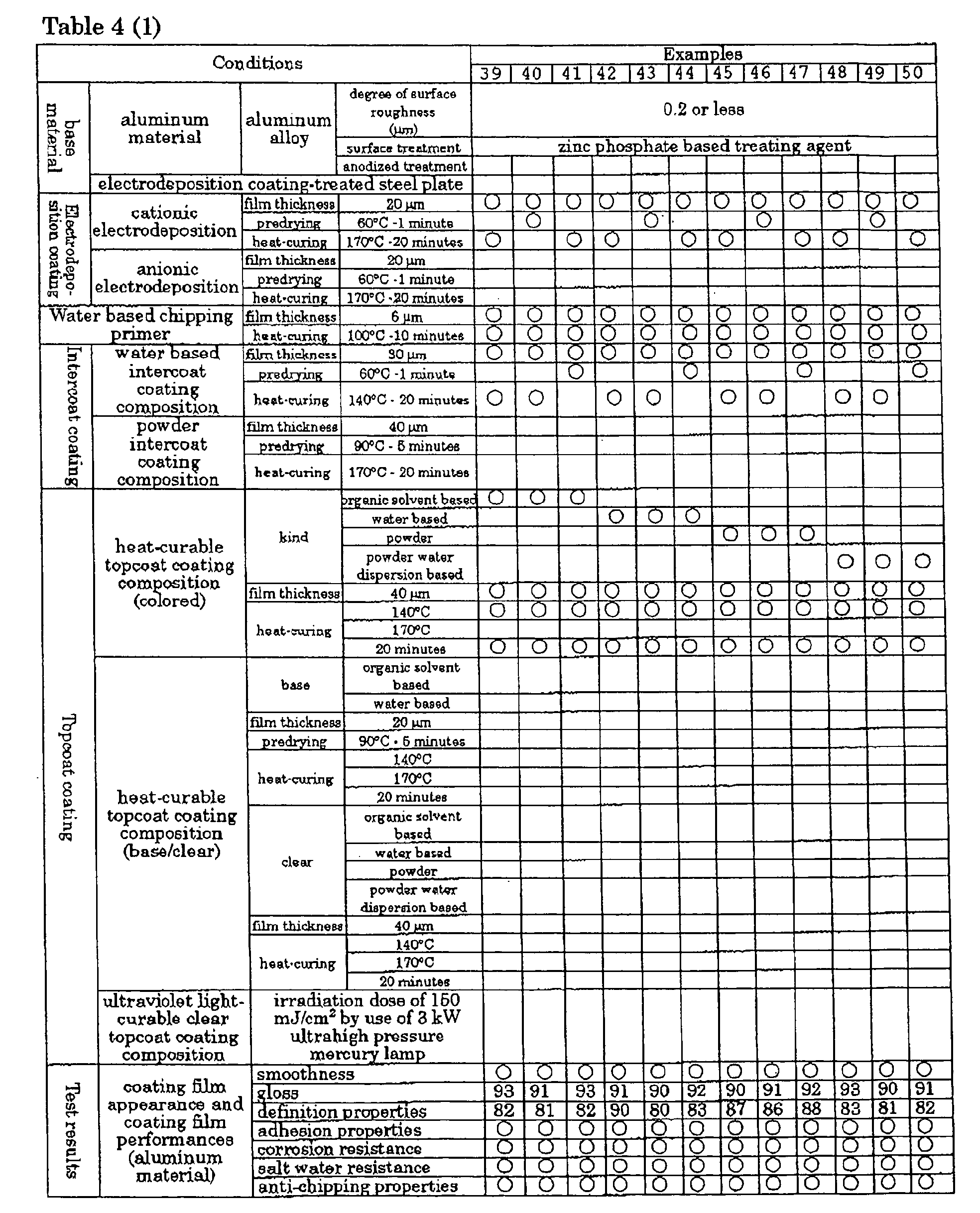

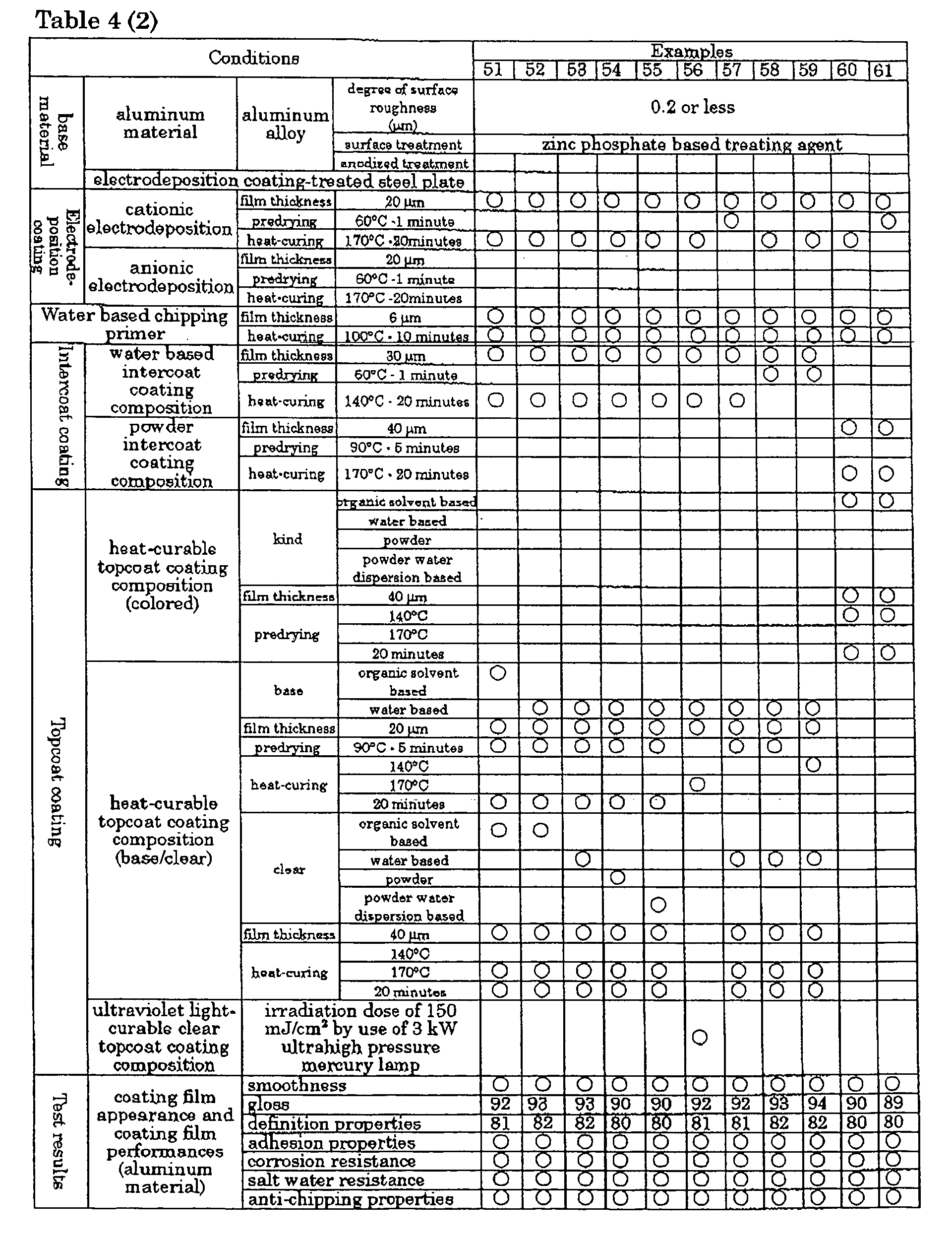

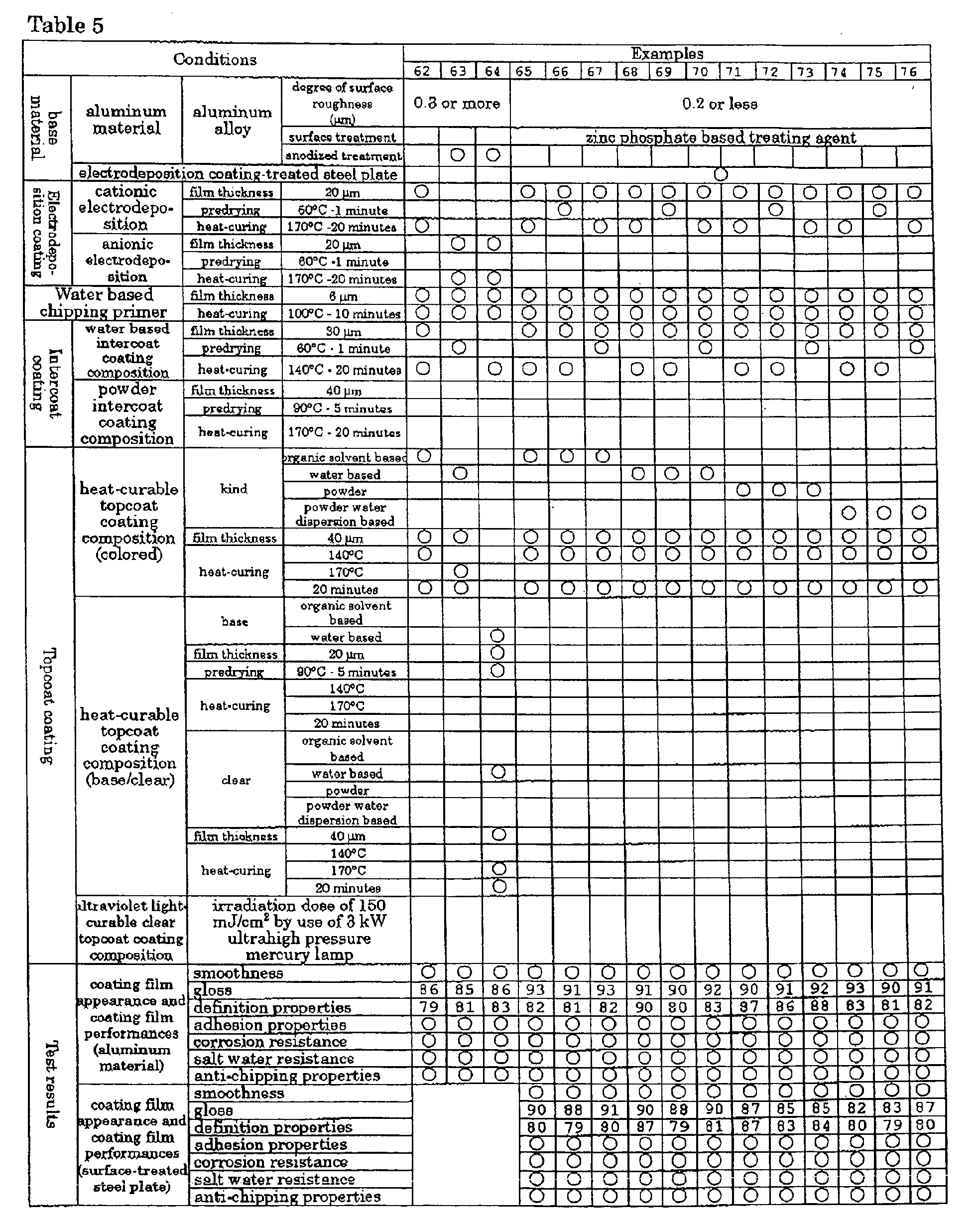

The electrodeposition coating described in Tables 4 and 5 represents the electrodeposition coating method and coating conditions for use in the aluminum material.

In addition to descriptions in Tables 1, 2 and 3, descriptions in Tables 4 and 5 include the following description.
Water based chipping primer coating composition: A resin obtained by subjecting 10 parts by weight of maleic acid to a graft polymerization to 100 parts by weight of propylene-ethylene copolymer (weight ratio 70:30, number average molecular weight: about 200000) was neutralized, followed by obtaining a water dispersion (static glass transition temperature: -41°C, tensile elongation at break at -20°C: 400%).

### Example 77

A 0.8 mm thick aluminum plate material (JIS A6061) was subjected to a degreasing washing, followed by subjecting to a surface treatment with a zinc phosphate based treating agent, coating a cationic electrodeposition coating composition Elecron GT-10 (blocked polyisocyanate curing epoxy resin electrodeposition coating composition, trade name, marketed by Kansai Paint Co., Ltd.), heat-curing at 170°C for 20 minutes so as to obtain an electrodeposition coating plate having a dry coating film thickness of about 20 µm, spray coating the following water based chipping primer coating composition so as to be a dry film thickness of about 6 µm, heat curing at 100°C for 20 minutes, spray coating a heat-curable topcoat coating composition (Neoamilac #6000 White, trade name, marketed by Kansai Paint Co., Ltd. organic solvent based) so as to be a dry film thickness of about 30 µm, and heat-curing at 140°C for 20 minutes to obtain respective test coating plate.

### Examples 78-98

Respective test coating plates of Examples 78-98 were prepared in the same manners as described in Tables 6 and 7.

### Examples 99-110

A 0.8 mm thick aluminum plate material (JIS A6061) was subjected to a degreasing washing, followed by subjecting to a surface treatment with a zinc phosphate treating agent to obtain a surface-treated aluminum material, separately a zinc-iron alloy molten zinc-plated steel plate was subjected to a surface treatment with a zinc phosphate treating agent, coating a following cationic electrodeposition coating composition so as to be a film thickness of 20 µm, washing with water, heat-curing at 170°C for 20 minutes to obtain an electrodeposition coating-treated steel plate, welding the surface-treated aluminum material and the coating-treated steel plate so that both coating surfaces are in the same side, subjecting both aluminum plate material and steel plate material to coating under the coating conditions as described in Tables 1 and 2.

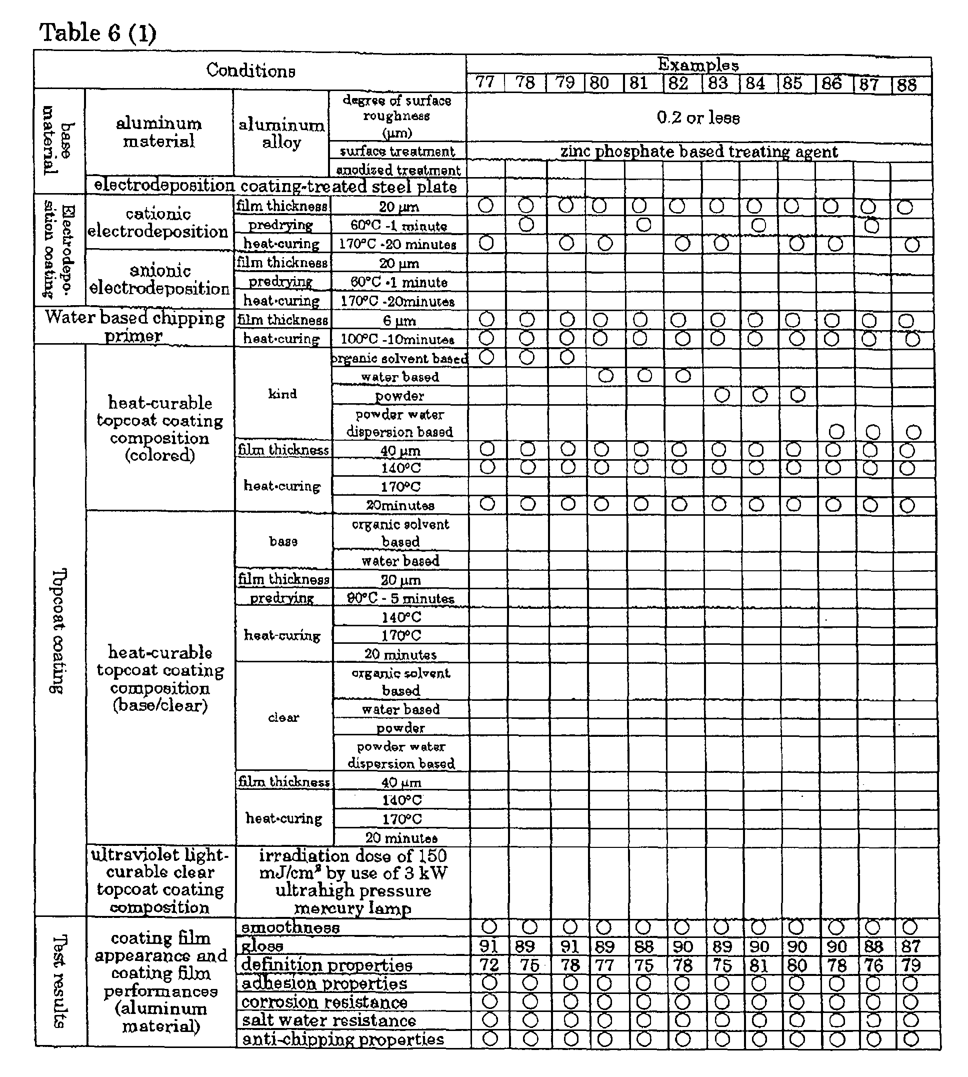

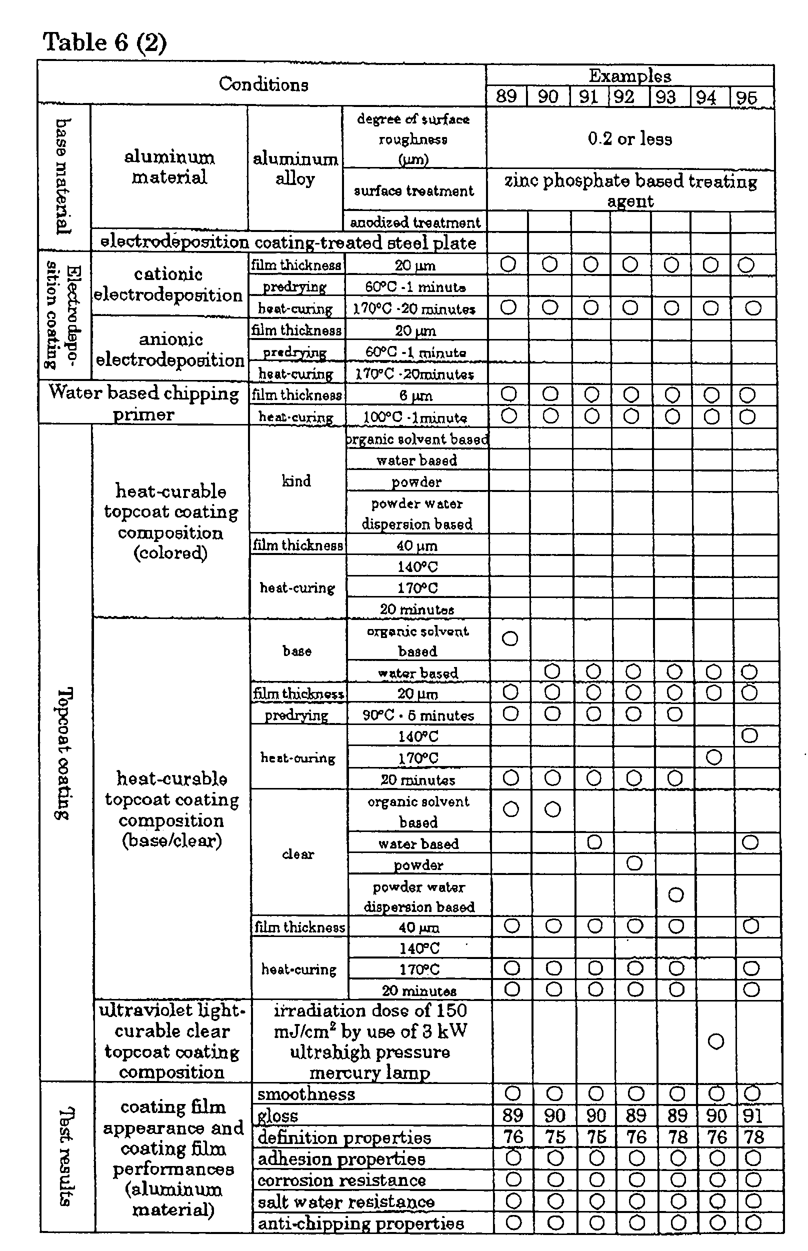

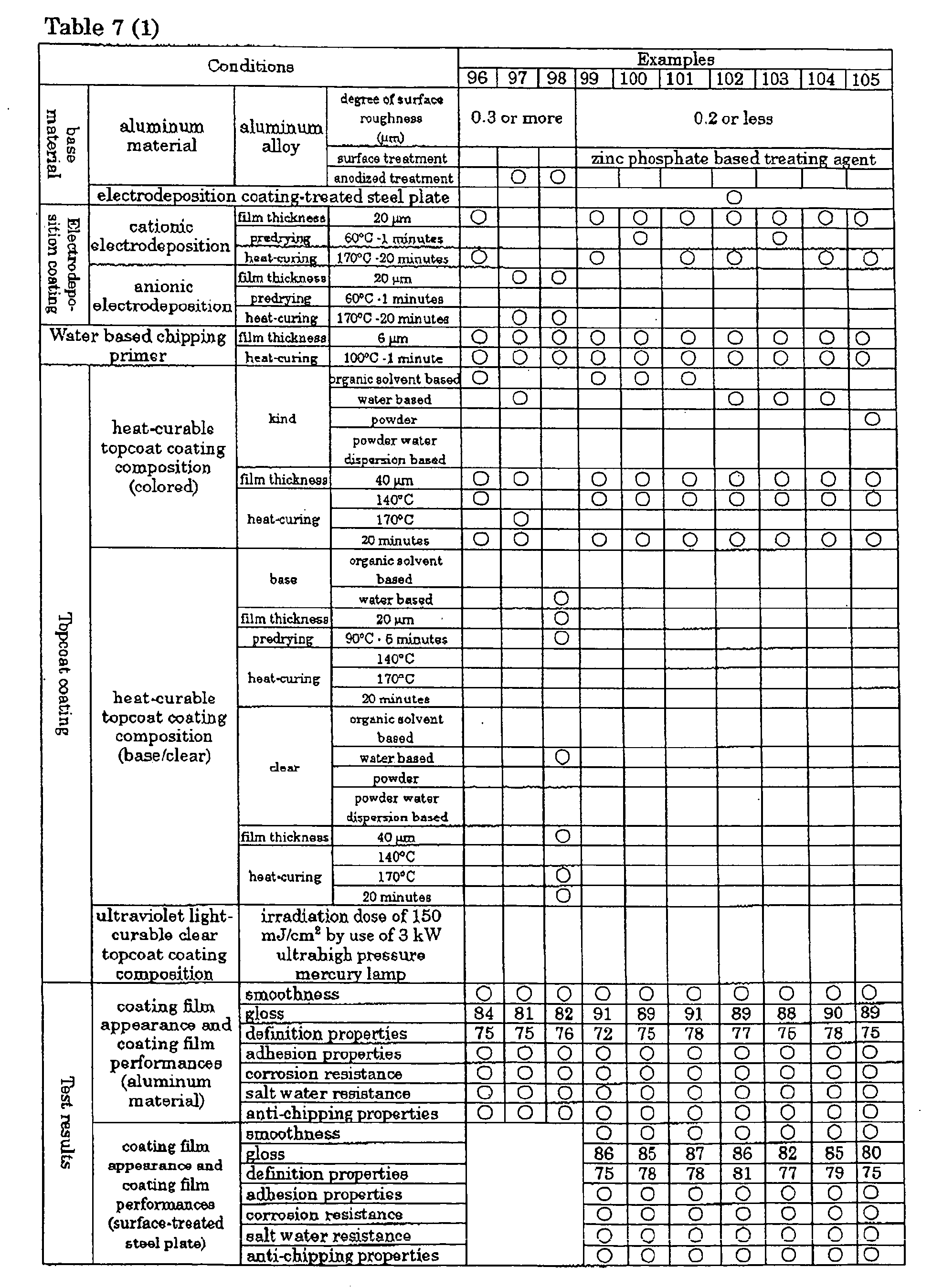

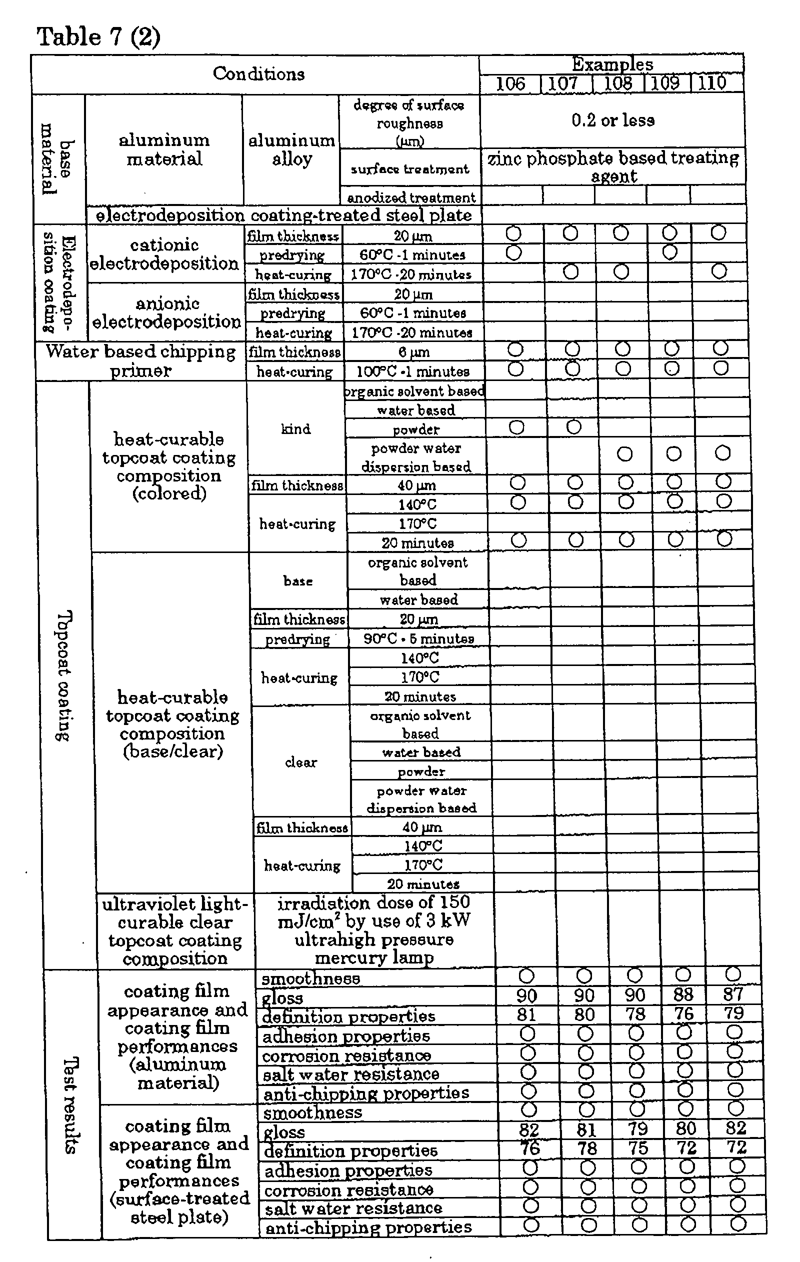

The electrodeposition coating described in Tables 6 and 7 represents the electrodeposition coating method and coating conditions for use in the aluminum material.

The base material and coating composition in Tables 6 and 7 are as described above, and test methods are as follows.

### Example 111

A 0.8 mm thick aluminum plate material (JIS A6061, Ra 0.2 µm) was successively subjected to degreasing treatment, etching treatment, smat removal treatment, anodizing treatment on a 170 g/λ sulfuric acid aqueous solution to form a 10 µm thick anodized film, followed by subjecting to a sealing treatment with deionized water at 80°C or higher, coating the following anionic electrodeposition coating composition, and heat curing at 170°C for 20 minutes to obtain an electrodeposition coating test plate having a dry coating film thickness of about 20 µm.

### Example 112

The aluminum material coated with the anodized film as formed in Example 111 was subjected to an alternating current secondary electrolysis (15 V, 20°C, 2 to 10 minutes) to obtain a bronzed colored aluminum material, subjecting to a sealing treatment with a deionized water at 80°C or higher, coating the following anionic electrodeposition coating composition, heat-curing at 170°C for 20 minutes to obtain an electrodeposition coating test plate having a dry coating film thickness of about 20 µm.

### Example 113

A 0.8 mm thick aluminum plate material (JIS A6061, Ra 0.2 µm) was successively subjected to degreasing treatment, vamite treatment (120 to 150°C steam treatment) to obtain an oxidized film, coating the following anionic electrodeposition coating composition, heat-curing at 170°C for 20 minutes to obtain an electrodeposition coating test plate having a dry coating film thickness of about 20 µm.

### Example 114

A 0.8 mm thick aluminum plate material (JIS A6061, Ra 0.2 µm) was successively subjected to degreasing treatment, vamite treatment (120 to 150°C steam treatment) to obtain an oxidized film, coating the following cationic electrodeposition coating composition, heat-curing at 170°C for 20 minutes to obtain an electrodeposition coating test plate having a dry coating film thickness of about 20 µm.

### Example 115

A 0.8 mm thick aluminum plate material (JIS A6061, Ra 0.2 µm) was subjected to a degreasing treatment, followed by dipping into a phosphate surface treating agent (manganese biphosphate/manganese silicofluoride/potassium fluoride/zinc acid phosphate/phosphoric acid aqueous solution) at 50°C for 2 to 5 minutes to form a zinc phosphate-treated film, coating the following anionic electrodeposition coating composition, heat-curing at 170°C for 20 minutes to obtain an electrodeposition coating test plate having a dry coating film thickness of about 20 µm.

### Example 116 .

A 0.8 mm thick aluminum plate material (JIS A6061, Ra 0.2 µm) was subjected to a degreasing treatment, followed by dipping into a phosphate surface treating agent (manganese biphosphate/manganese silicofluoride/potassium fluoride/zinc acid phosphate/phosphoric acid aqueous solution) at 50°C for 2 to 5 minutes to form a zinc phosphate-treated film, coating the following cationic electrodeposition coating composition, heat-curing at 170°C for 20 minutes to obtain an electrodeposition coating test plate having a dry coating film thickness of about 20 µm.

### Example 117

A 0.8 mm thick aluminum plate material (JIS A6061, Ra 0.2 µm) was subjected to a degreasing treatment, followed by forming a titanium-treated film by use of the following titanium based surface treating agent, coating the following anionic electrodeposition coating composition, heat-curing at 170°C for 20 minutes to obtain an electrodeposition coating test plate.

### Example 118

A 0.8 mm thick aluminum plate material (JIS A6061, Ra 0.2 µm) was subjected to a degreasing treatment, followed by forming a titanium-treated film by use of the following titanium based surface treating agent, coating the following cationic electrodeposition coating composition, heat-curing at 170°C for 20 minutes to obtain an electrodeposition coating test plate.

### Comparative Example 3

A zinc-iron alloy molten zinc-plated steel plate was subjected to a surface treatment by use of a zinc phosphate treating agent, followed by coating the following anionic electrodeposition coating composition, heat-curing at 170°C for 20 minutes to obtain an electrodeposition coating test plate.

### Comparative Example 4

A zinc-iron alloy molten zinc-plated steel plate was subjected to a surface treatment by use of a zinc phosphate treating agent, followed by coating the following cationic electrodeposition coating composition, heat-curing at 170°C for 20 minutes to obtain an electrodeposition coating test plate.
Cationic electrodeposition coating composition:
   Eleclon GT-10 (trade name, marketed by Kansai Paint Co., Ltd., blocked polyisocyanate-curing epoxy resin electrodeposition coating composition).
Anionic electrodeposition coating composition:
   Eleclon AG210 (trade name, marketed by Kansai Paint Co., Ltd., melamine resin-curing acrylic resin electrodeposition coating composition).

Results are shown in Table 8.

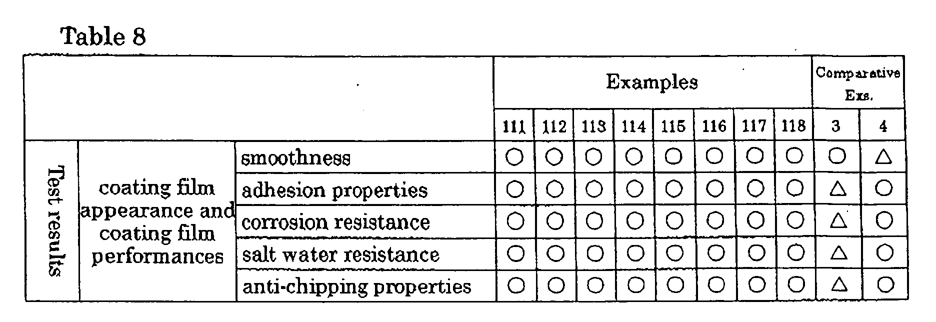

### Example 119

A 0.8 mm thick aluminum plate material (JIS A6061, Ra 0.2 µm) was successively subjected to degreasing treatment, etching treatment, smat removal treatment, anodizing treatment in a 170 g/λ sulfuric acid aqueous solution to form a 10 µm thick anodized film (A), followed by spray coating the following heat-curable water based intercoat coating composition so as to be a film thickness of 30 µm, heat-curing at 140°C for 20 minutes, spray coating a heat-curable topcoat coating composition (Neoamilac #6000 White, trade name, marketed by Kansai Paint Co., Ltd. organic solvent based) so as to be a dry film thickness of about 80 µm, and heat-curing at 140°C for 20 minutes to obtain respective test coating plate.

### Example 120

The aluminum material coated with the anodized film as formed in Example 111 was subjected to an alternating current secondary electrolysis (15 V, 20°C, 2 to 10 minutes) in a 25 g/λ nickel sulfate aqueous solution to obtain a bronzed colored aluminum material (B), subjecting to a sealing treatment with a deionized water at 80°C or higher, spray coating the following heat-curable water based intercoat coating composition so as to be a film thickness of 30 µm, heat-curing at 140°C for 20 minutes, spray coating a heat-curable topcoat coating composition (Neoamilac #6000 White, trade name, marketed by Kansai Paint Co., Ltd. organic solvent based) so as to be a dry film thickness of about 80 µm, and heat-curing at 140°C for 20 minutes to obtain respective test coating plate.

### Example 121

A 0.8 mm thick aluminum plate material (JIS A6061, Ra 0.2 µm) was subjected to degreasing treatment, vamite treatment (120 to 150°C steam treatment) to obtain an oxidized film (C), followed by spray coating the following heat-curable water based intercoat coating composition so as to be a film thickness of 30 µm, heat-curing at 140°C for 20 minutes, spray coating a heat-curable topcoat coating composition (Neoamilac #6000 white, trade name, marketed by Kansai Paint Co., Ltd. organic solvent based) so as to be a dry film thickness of about 80 µm, and heat-curing at 140°C for 20 minutes to obtain respective test coating plate.

### Example 122

A 0.8 mm thick aluminum plate material (JIS A6061, Ra 0.2 µm) was subjected to a degreasing treatment, followed by dipping into a phosphate surface treating agent (manganese biphosphate/manganese silicofluoride/potassium fluoride/zinc acid phosphate/phosphoric acid aqueous solution) at 50°C for 2 to 5 minutes to form a zinc phosphate-treated film (D), spray coating the following heat-curable water based intercoat coating composition so as to be a film thickness of 30 µm, heat-curing at 140°C for 20 minutes, spray coating a heat-curable topcoat coating composition (Neoamilac #6000 White, trade name, marketed by Kansai Paint Co., Ltd. organic solvent based) so as to be a dry film thickness of about 80 µm, and heat-curing at 140°C for 20 minutes to obtain respective test coating plate.

### Example 123

A 0.8 mm thick aluminum plate material (JIS A6061, Ra 0.2 µm) was subjected to a degreasing treatment, followed by forming a titanium-treated film (E) by use of the following titanium based surface treating agent, spray coating the following heat-curable water based intercoat coating composition so as to be a film thickness of 30 µm, heat-curing at 140°C for 20 minutes, spray coating a heat-curable topcoat coating composition (Neoamilac #6000 White, trade name, marketed by Kansai Paint Co., Ltd. organic solvent based) so as to be a dry film thickness of about 80 µm, and heat-curing at 140°C for 20 minutes to obtain respective test coating plate.
Titanium based surface treating agent:
   A mixture of 50 parts of 2% titanium based aqueous solution (a titanium-containing yellow translucent viscous 2% solid content titanium based aqueous solution prepared by diluting 5 ml of 60% titanium tetrachloride solution to 500 ml by adding distilled water, followed by dropping ammonia water (1:9) to precipitate titanium hydroxide, washing with distilled water and adding 10 ml of 30% hydrogen peroxide water with agitation; 5 parts of zirconium hydrofluoric acid and 35 parts of deionized water.

### Examples 124-148

Respective coating test plates were prepared coating onto the oxidized film-formed aluminum material as in Tables 9 and 10 successively the curable water based intercoat coating composition and the curable topcoat coating composition, followed by heat-curing under the coating conditions as described in Table 9.

### Examples 149-158

An aluminum material treated by use of the surface treating agent as in Tables 9 and 10 was prepared. Separately the zinc-iron alloy molten zinc-plated steel plate was subjected to a surface treatment by use of a zinc phosphate treating agent to obtain a surface-treated steel plate, followed by coating the following cationic electrodeposition coating composition so as to be a film thickness of 20 µm, washing with water, heat curing at 170°C for 20 minutes to obtain a coating-treated steel plate. The treated aluminum material and the treated steel plate were welded so as to be on the same side, followed by coating both the aluminum material and the steel plate under the coating conditions as described in Table 9.

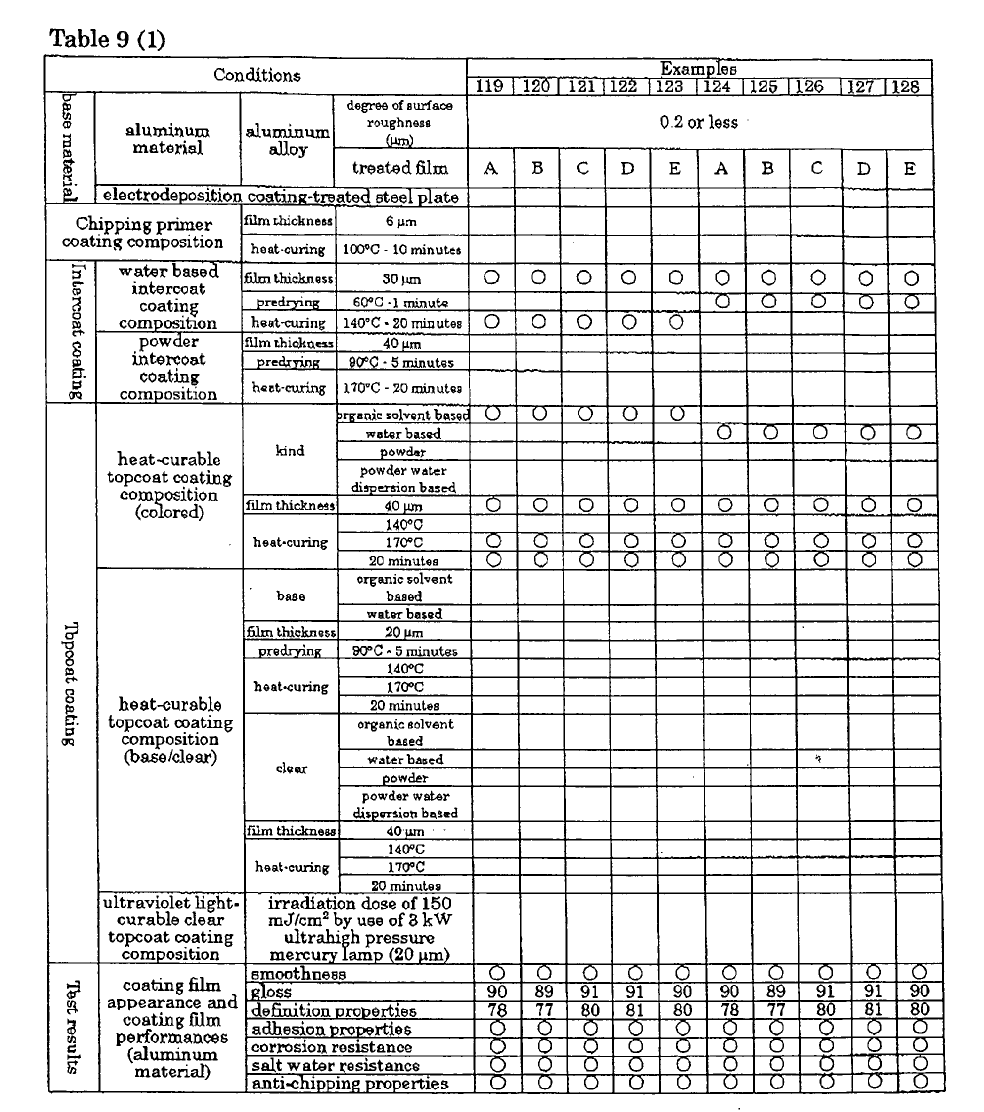

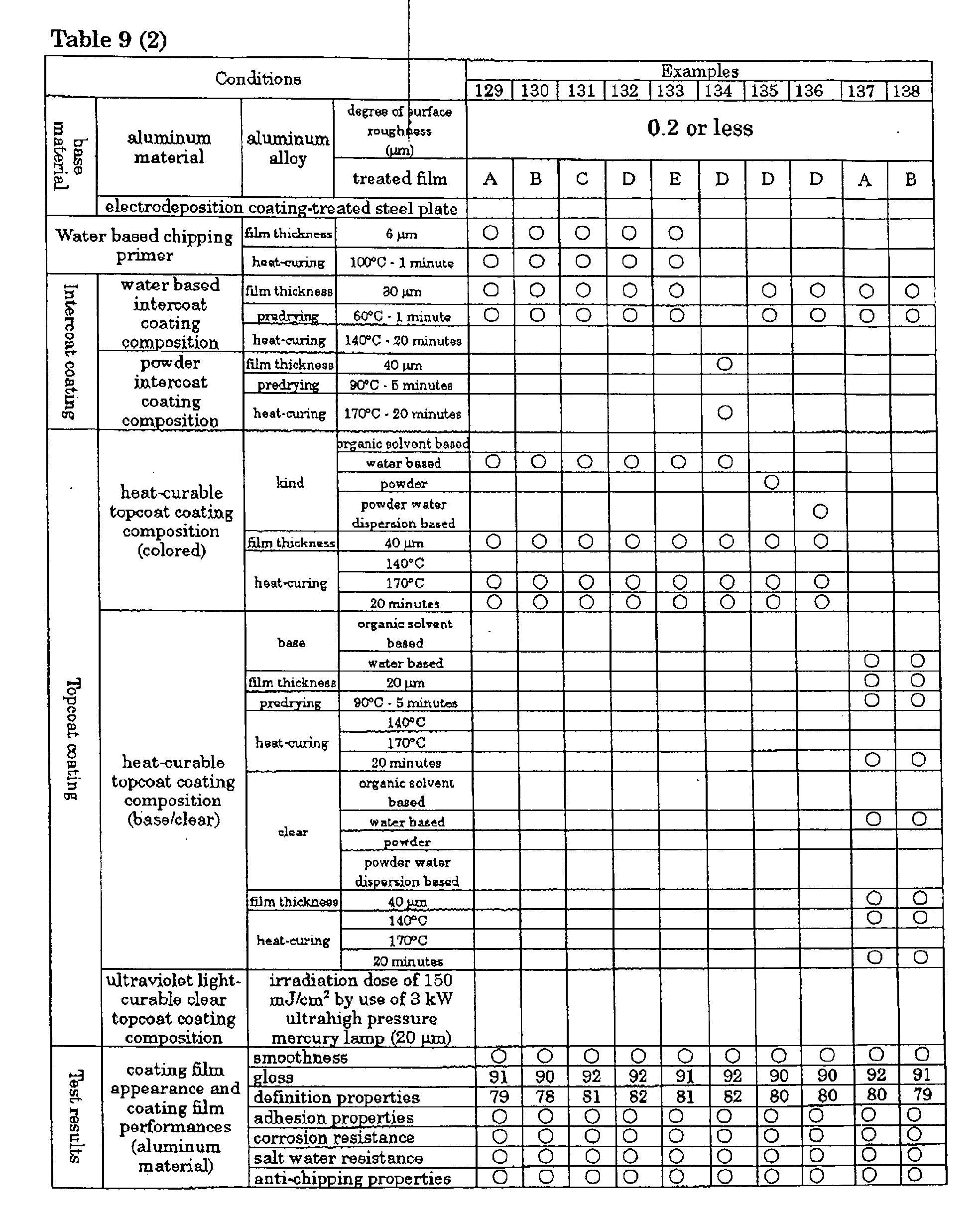

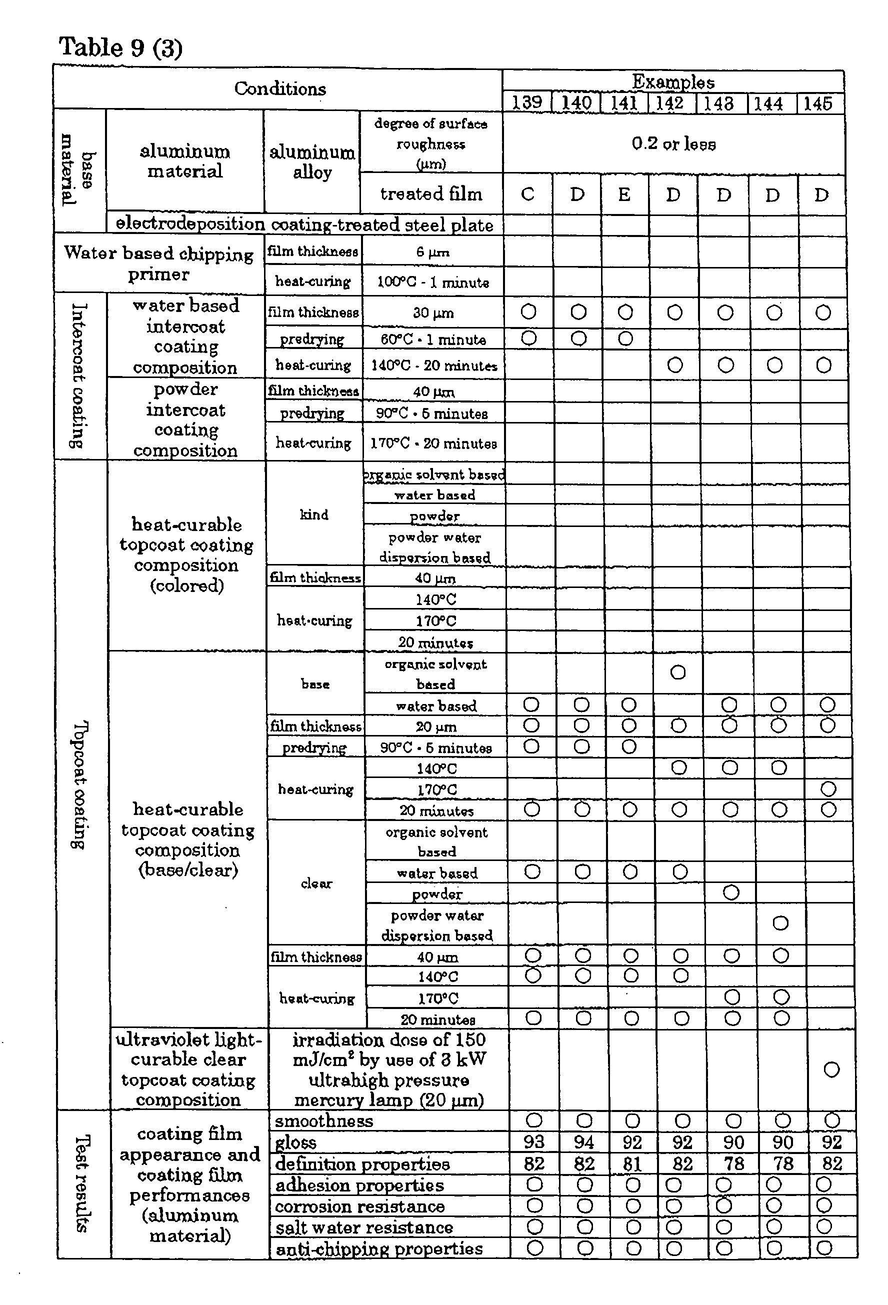

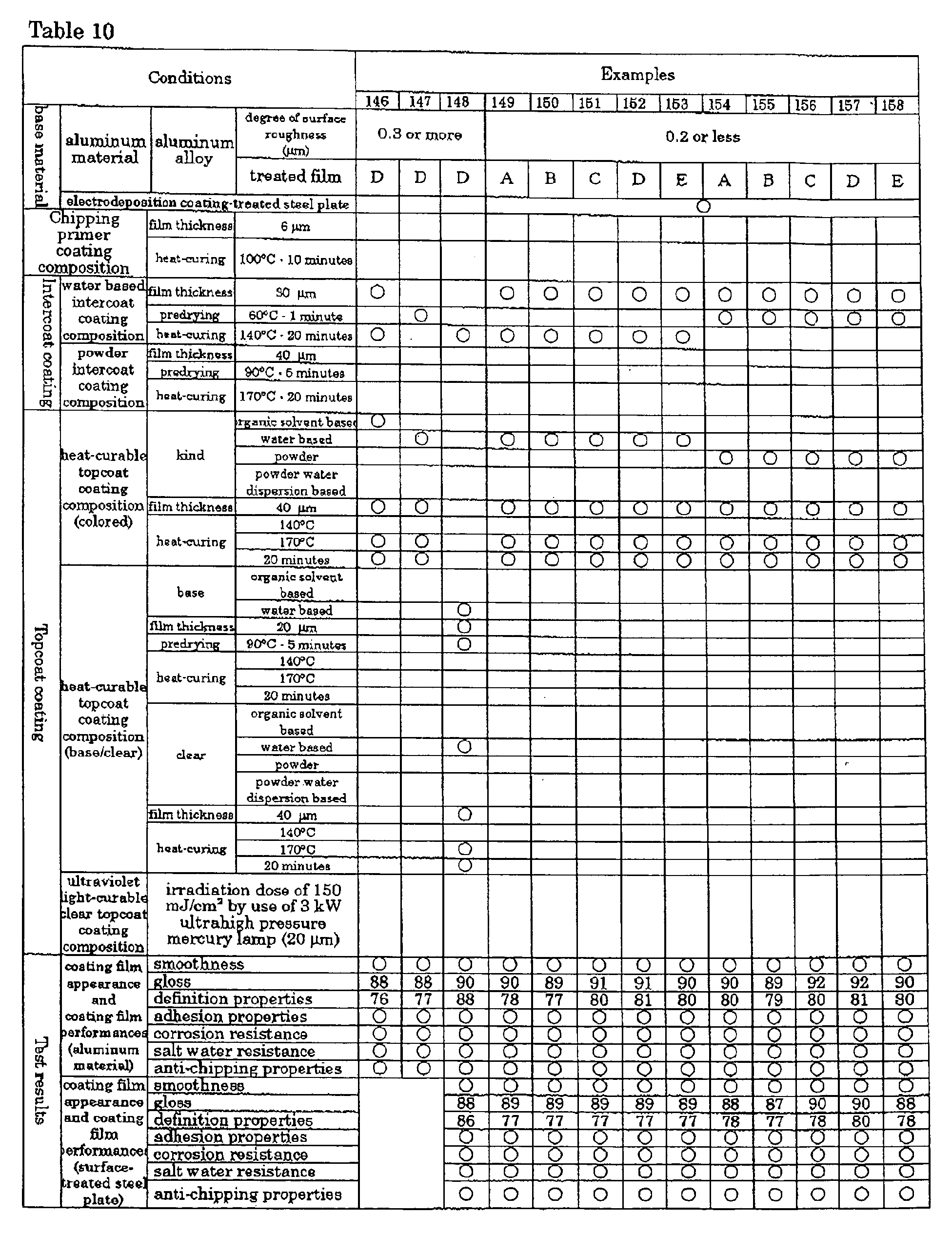

### Comparative Examples 5-6

Respective coating test plates of Comparative Examples 5-6 were prepared in the same manner as in Table 11.

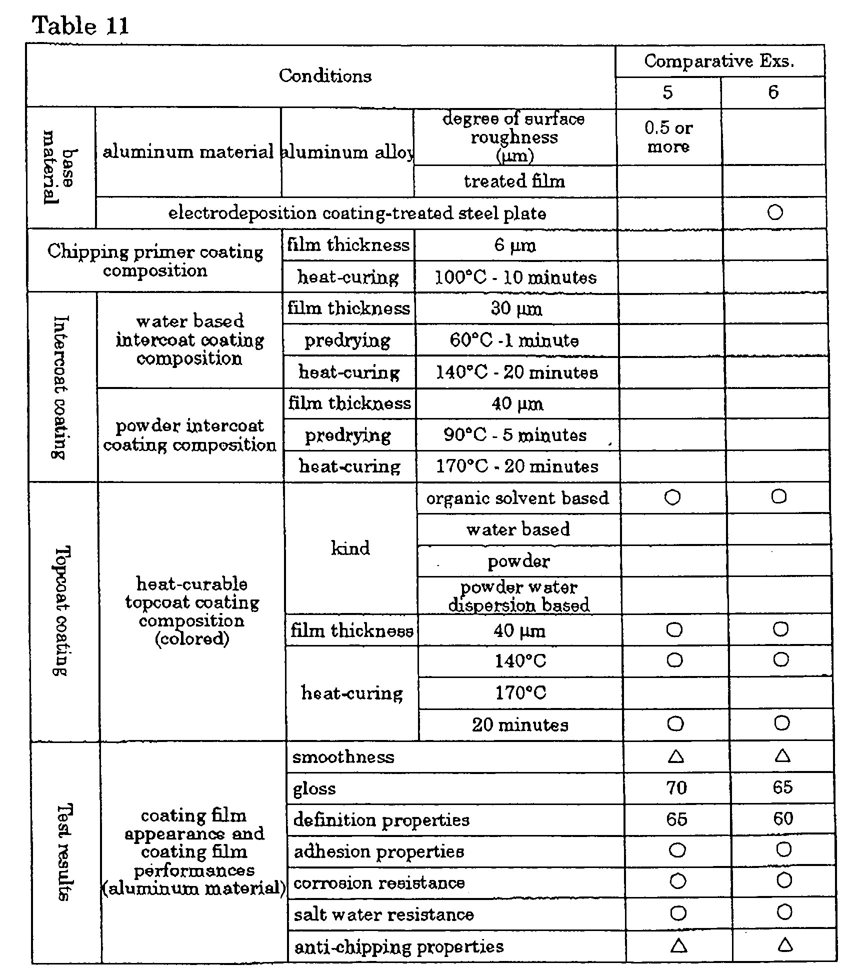

The electrodeposition coating described in Tables 9,10 and 11 represents the electrodeposition coating method and coating conditions for use in the aluminum material.

The base material and coating composition in Tables 9,10 and 11 are as described above, and test methods are as follows.

### Example 159

A 0.8 mm thick aluminum plate material having a bent part (JIS A6061, Ra0.2*µ*m) was successively subjected to degreasing treatment, etching treatment, smat removal treatment, anodizing treatment in a 170 g/l sulfuric acid aqueous solution to form a 10*µ*m thick anodized film (A), followed by applying the following film facing material (1) onto the surface of the cementing material with the results that the film facing material showed good appearance without coating film drawbacks such as wrinkles, blisters, bubbling, reduction in gloss, separation, cracks and the like in both bent area and plane area.

The film facing material was dipped into a tap water at 40°C for 20 days, followed by examining coating film drawbacks such as separation, blisters, reduction in gloss and the like with the result that nothing was abnormal to be good.

The anti-chipping properties test was carried and as follows. No.7 ground stone (100 g) was sprayed onto the surface of the coating film at an angle of 90° to the surface of the coating film, followed by subjecting the stone-sprayed surface to a separation test by use of a gum tape to evaluate as follows. ○ : no separation of coating film was observed ; Δ : slight separation of coating film was observed ; × : remarkable separation of coating film was observed. The test result was evaluated as ○ to be good.

### Example 160

The aluminum material coated with the anodized film as formed in Example 159 was subjected to an alternating current secondary electrolysis (15 V, 20°C, 2 to 10 minutes) in a 25 g/l nickel sulfate aqueous solution to obtain a bronzed colored aluminum material (B), followed by applying the following film facing material (1) onto the surface of the cementing material with the result that the film facing material showed good appearance without coating film drawbacks such as wrinkles, blisters, bubbling, reduction in gloss, separation, cracks and the like.

The film facing material was dipped into a tap water at 40°C for 20 days, followed by examining coating film drawbacks such as separation, blisters, reduction in gloss and the like with the result that nothing was abnormal to be good.

The anti-chipping properties test result was evaluated as ○ to be good.

### Example 161

A 0.8 mm thick aluminum plate material (JIS A6061, Ra 0.2 *µ*m) was subjected to degreasing treatment, vamite treatment (120 to 150°C steam treatment) to obtain an oxidized film(C), followed by applying the following film facing material(1) onto the surface of the cementing material, with the result that the film facing material showed good appearance without coating film drawbacks such as wrinkles, blisters, bubbling, reduction in gloss, separation, cracks and the like.

The film facing material was dipped into a tap water at 40°C for 20 days, followed by examining coating film drawbacks such as separation, blisters, reduction in gloss and the like with the result that nothing was abnormal to be good.

The anti-chipping properties test result was evaluated as ○ to be good.

### Example 162

A 0.8 mm thick aluminum plate material having a bent part (JIS A 6061, Ra 0.2 *µ*m) was subjected to a degreasing treatment, followed by dipping into a phosphate surface heating agent (manganese biphosphate / manganese silicofluoride / potassium fluoride / zinc acid phosphate/phophoric acid aqueous solution) at 50°C for 2 to 5 minutes to form a zinc phosphate-treated film (D), followed by applying the following film facing material (1) onto the surface of the cementing material with the result that the film facing material showed good appearance without coating film drawbacks such as wrinkles, blisters, bubbling, reduction in gloss, separation, cracks and the like.

The film facing material was dipped into a tap water at 40°C for 20 days, followed by examining coating film drawbacks such as separation, blisters, reduction in gloss and the like with the result that nothing was abnormal to be good.

The anti-chipping properties test result was evaluated as ○ to be good.

### Example 163

A 0.8 mm thick aluminum plate material (JIS A6061, Ra 0.2 µm) was subjected to degreasing treatment, followed by forming a titanium-treated film(E) by use of the following titanium based surface treating agent, followed by applying the following film facing material (1) onto the surface of the cementing material with the result that the film facing material showed good appearance without coating film drawbacks such as wrinkles, blisters, bubbling, reduction in gloss, reparation, cracks and the like.

The film facing material was dipped into a tap water at 40°C for 20 days, followed by examining coating film drawbacks such as separation, blisters, seduction in gloss and the like with the result that nothing was abnormal to be good.

The anti-chipping properties test result was evaluated as ○ to be good.

Titanium based surface treating agent:
A mixture of 50 parts of 2% titanium based aqueous solution (a titanium-containing yellow translucent viscous 2% solid content titanium based aqueous solution prepared by diluting 5ml of 60% titanium tetrachloride solution to 500ml by adding distilled water, followed by dropping ammonia water (1:9) to precipitate titanium hydroxide, washing with distilled water and adding 10ml of 30% hydrogen peroxide water with agitation; 5 parts of zirconium hydrofluoric acid and 35 parts of deionized water.

### Example 164

An aluminum material subjected to the vamite treatment (120-150°C steam treatment) to form the oxidized film(C) was subjected to the cationic electrodeposition coating by use of Eleclon GT-10(trade name, marketed by Kansai Paint Co., Ltd., blocked polyisocyanate curing epoxy resin electrodeposition coating composition, gray), followed by heat-curing at 170°C for 20 minutes to form an electrodeposition coating test plate, followed by applying the following film facing material (1) onto the surface of the cementing material with the result that the film facing material showed good appearance without coating film drawbacks such as wrinkles, blisters, bubbling, reduction in gloss, separation, cracks and the like.

The film facing material was dipped into a tap water at 40°C for 20 days, followed by examining coating film drawbacks such as separation, blisters, seduction in gloss and the like with the result that nothing was abnormal to be good.

The anti-chipping properties test result was evaluated as ○ to be good.

### Example 165

An aluminum material subjected to the vamite treatment (120-150°C steam treatment) to form the oxidized film(C) was subjected to the cationic electrodeposition coating by use of Eleclon GT-10(trade name, marketed by Kansai Paint Co., Ltd., blocked polyisocyanate curing epoxy resin electrodeposition coating composition, gray), followed by heat-curing at 170°C for 20 minutes to form an electrodeposition coating test plate, followed by spray coating the following water based chipping primer coating composition to be a dry coating film thickness of about 6*µ*m, heat-curing at 100°C for 20 minutes, followed by applying the following film facing material (1) onto the surface of the cementing material with the result that the film facing material showed good appearance without coating film drawbacks such as wrinkles, blisters, bubbling, reduction in gloss, separation, cracks and the like.

The film facing material was dipped into a tap water at 40°C for 20 days, followed by examining coating film drawbacks such as separation, blisters, seduction in gloss and the like with the result that nothing was abnormal to be good.

The anti-chipping properties test result was evaluated as ○ to be good.

### Example 166

An aluminum material subjected to the vamite treatment (120-150°C steam treatment) to form the oxidized film(C) was subjected to the cationic electrodeposition coating by use of Eleclon GT-10(trade name, marketed by Kansai Paint Co., Ltd., blocked polyisocyanate curing epoxy resin electrodeposition coating composition, gray), followed by heat-curing at 170°C for 20 minutes to form an electrodeposition coating test plate, followed by spray coating the following water based chipping primer coating composition to be a dry coating film thickness of about 6*µ*m, heat-curing at 100°C for 20 minutes, followed by spray coating the following heat-curable water based intercoat coating composition so as to be a film thickness of 30*µ*m, heat-curing at 140°C for 20 minutes, followed by applying the following film facing material (1) onto the surface of the cementing material with the result that the film facing material showed good appearance without coating film drawbacks such as wrinkles, blisters, bubbling, reduction in gloss, separation, cracks and the like.

The film facing material was dipped into a tap water at 40°C for 20 days, followed by examining coating film drawbacks such as separation, blisters, seduction in gloss and the like with the result that nothing was abnormal to be good.

The anti-chipping properties test result was evaluated as ○ to be good.

### Example 167

The following film facing material (2) was applied onto the surface of the bronzed colored aluminum material (B) through the surface of the cementing material, with the result that the film facing material showed good appearance without coating film drawbacks such as wrinkles, blisters, bubbling, reduction in gloss, separation, cracks and the like.

The resulting film facing material showed excellent properties in finish appearance with high chroma, which properties were impossible in the case where the conventional coating film is formed directly onto the automobile body.

The film facing material was dipped into a tap water at 40°C for 20 days, followed by examining coating film drawbacks such as separation, blisters, seduction in gloss and the like with the result that nothing was abnormal to be good.

The anti-chipping properties test result was evaluated as ○ to be good.

### Example 168

An anionic electrodeposition coating composition (Eleclon AG, trade name, marketed by Kansai Paint Co., Ltd., melamine resin-curing acrylic resin electrodeposition coating composition, clear) was coated onto the bronzed colored aluminum material (B), followed by heat-curing at 170°C for 20 minutes to obtain an electrodeposition coating test plate having a dry coating film thickness of about 20*µ*m, followed by applying the following film facing material (3) onto the surface of the bronzed colored aluminum material (B) through the surface of the cementing material, with the result that the film facing material showed good appearance without coating film drawbacks such as wrinkles, blisters, bubbling, reduction in gloss, separation, cracks and the like.

The resulting film facing material showed excellent properties in finish appearance with high chroma, which properties were impossible in the case where the conventional coating film is formed directly onto the automobile body.

The film facing material was dipped into a tap water at 40°C for 20 days, followed by examining coating film drawbacks such as separation, blisters, reduction in gloss and the like with the result that nothing was abnormal to be good.

The anti-chipping properties test result was evaluated as ○ to be good.

### Example 169

An anionic electrodeposition coating composition (Eleclon AG, trade name, marketed by Kansai Paint Co., Ltd., melamine resin-curing acrylic resin electrodeposition coating composition, clear) was coated onto the bronzed colored aluminum material (B), followed by heat-curing at 170°C for 20 minutes to obtain an electrodeposition coating test plate having a dry coating film thickness of about 20*µ*m, followed by applying the following film facing material (3) onto the surface of the bronzed colored aluminum material (B) through the surface of the cementing material, with the result that the film facing material showed good appearance without coating film drawbacks such as wrinkles, blisters, bubbling, reduction in gloss, separation, cracks and the like.

The resulting film facing material showed excellent properties in finish appearance with high chroma, which properties were impossible in the case where the conventional coating film is formed directly onto the automobile body.

The film facing material was dipped into a tap water at 40°C for 20 days, followed by examining coating film drawbacks such as separation, blisters, reduction in gloss and the like with the result that nothing was abnormal to be good.

The anti-chipping properties test result was evaluated as ○ to be good.

### Example 170

A automobile body outer plate excluding a bonnet part (zinc-iron alloy molten zinc-plated steel plate) was subjected to a surface treatment by use of a zinc phosphate treating agent, followed by coating a cationic electrodeposition coating composition so as to be a dry film thickness of 20µm, washing with water, heat-curing at 170°C for 20 minutes to obtain an electrodeposition coat-treated steel plate, spray coating the following heat-curable water based intercoat coating composition so as to be a dry film thickness of 30µm, heat-curing at 140°C for 20 minutes, spray coating the following clear composition ① so as to be a dry film thickness of 20µm, heat-curing at 100°C for 10 minutes, spray coating the following clear composition ① so as to be a dry film thickness of 20µm, heat-curing at 140°C for 20 minutes.

Separately, the following film facing material (1) was applied onto an aluminum material with the zinc phosphate-treated film (D) through the surface of the cementing material. Both steel plate and aluminum material was assembled to form an automobile body, with the result that the film facing material showed good appearance without coating film drawbacks such as wrinkles, blisters, bubbling, reduction in gloss, separation, cracks and the like.

The film facing material was dipped into a tap water at 40°C for 20 days, followed by examining coating film drawbacks such as separation, blisters, reduction in gloss and the like with the result that nothing was abnormal to be good.

The anti-chipping properties test result was evaluated as ○ to be good.

### Comparative Example 7

A zinc-iron alloy molten zinc-plated steel plate was subjected to a surface treatment by use of a zinc phosphate treating agent, followed by spray coating the following heat-curable water based intercoat coating composition so as to be a dry film thickness of 30 µm, heat-curing at 140°C for 20 minutes, spray coating the following pearl gloss composition ① so as to be a dry film thickness of 20 *µ*m, heat-curing at 100°C for 10 minutes, spray coating the following clear composition ① so as to be a dry
film thickness of 20*µ*m, and heat-curing at 140°C for 20 minutes, with the result that the resulting coating film showed reduction in gloss, orange peel, pinholes compared with Examples.

The anti-chipping properties was evaluated as Δ.
Water based chipping primer coating composition:
   A resin obtained by subjecting 10 parts by weight of maleic acid to a graft polymerization to 100 parts by weight of propylene-ethylene copolymer (weight ratio 70:30, number average molecular weight: about 200000) was neutralized, followed by obtaining a water dispersion(static glass transition tenperation :-41°C, tensile elongation at break at -20°C(:400%).
Intercret wating composition:
   (Lugabake intercoat coating composition, gray, trade name, marketed by Kansai Paint Co., Ltd., polyester resin melamine resin based, organic solvent based) was subjected to an electrostatic spray coating so as to be a dry film thickness of 40*µ*m, followed by heat-curing at 140°C for 30 minutes.
Film facing material (1) (colored) :
   The following pearl gloss composition ① was screen printed onto a polyethylene terephthalate film (50 *µ*m) so as to be a dry film thickness of 20 *µ*m, heat-curing at 100°C for 10 minutes, screen printing the following clear composition ① so as to be a dry film thickness of 20 *µ*m, heat-curing at 100°C for 10 minutes, and laminating an acrylic resin based pressure-sensitive adhesive (30 *µ*m).
The pearl gloss composition ① :
   An organic solvent based ink comprising 70 parts of hydroxyl group-containing acrylic resin (hydroxy value 100, number average molecular weight 20000), 30 parts of hexamethylene diisocyanate crosslinking agent, and 10 parts of titanium oxide-coated flake mica (diameter maximum) 10 to 20 *µ*m, thickness 0.5 to 1 *µ*m, optical thickness of titanium oxide : about 140 nm, geometrical thickness about 60 *µ*m, trade name, Ilyozine 03R, marketed by Merk Co., Ltd.).
Clear Composition ①:
   An organic solvent based ink comprising 70 parts of hydroxyl group-containing acrylic resin (hydroxy value 100, number average molecular weight 20000) and 30 parts of hexamedylene diisocyanate crosslinking agent.
Film facing material (2) clear :
   The clear composition ① was screen printed onto the surface of polyethylene terephthalate film (50*µ*m) so as to be a dry film thickness of 20*µ*m, followed by heat-curing at 100°C for 10 minutes, and laminating an acrylic resin based presure-sensitive adhesive (30*µ*m) onto the back side of the polyethylene terephthalute film.
Film facing material (3)(pattern printed):
   A pearl gloss composition ① was scream printed onto the one side of a releasable polyethylene terephthalate film layer (application film) by use of a knife coater so as to be a dry film thickness of 30*µ*m and to obtain a marble pattern, and heat-curing at 80°C for 15 minutes to obtain a laminate film.

Separately, an acrylic resin based presure-sensitive adhesive (16*µ*m)was onto the release-treated film surface to obtain an adhesive film.

The pearl gloss surface of the laminate film was faced to the surface of the acrylic resin based pressure-sensitive adhesive layer, followed by pressing and cementing to obtain a transfer film laminating application film/Retan PG-80 (clear)/ acrylic resin based pressure-sensitive adhesive/release-treated film.

Disclosed, but not at present claimed, herein are:
(A) an automobile body-coating method which comprises optionally subjecting an outer plate area and/or an inner plate area of an automobile body comprising an aluminum material, an aluminum material-coated steel material or an aluminum material and steel material-combined metal material to a surface treatment, successively followed by coating a heat-curable electrodeposition coating composition to form a curable electrodeposition coating film, (1) coating a heat-curable water based intercoat coating composition to form a water based intercoat coating film or coating a heat-curable intercoat powder coating composition to form an intercoat powder coating film, (2) coating a water based chipping primer to form a water based chipping primer coating film followed by coating a heat-curable water based intercoat coating composition to form a water based intercoat coating film or coating a heat-curable intercoat powder coating composition to form an intercoat powder coating film, or (3) coating a water based chipping primer to form a water based chipping primer coating film, and coating a topcoat coating composition to form a curable topcoat coating film, respective coating films being heat-cured independently from each other to cure all of the respective coating films, or at least one multi-layer coating film selected from the group consisting of successively formed at least two-layer coating films being heat-cured simultaneously and at least one remaining coating film being independently cured respectively; and
(B) an automobile body-coating method which comprises applying a film facing material onto the surface of an aluminum material or an aluminum material-coated steel material in an outer plate area and/or an inner plate area of the automobile body comprising an aluminum material, an aluminum-coated steel material or an aluminum material and steel material-combined metal material, the film facing material being applied onto the surface of an aluminum material which is optionally subjected to a surface treatment, followed by being subjected to an oxidizing treatment.

In method (A), the curable topcoat coating composition may be at least one coating composition selected from the group consisting of a heat-curable water based coating composition, heat-curable organic solvent based coating composition, heat-curable powder coating composition, heat-curable powder water dispersion based coating composition and actinic ray-curable coating composition.

In method (A), the aluminum material may be subjected to a zinc phosphate treatment.

In method (A) or (B), the aluminum material may be a JIS A-6000 series aluminum alloy base material containing magnesium and silica.

In method (A), the aluminum material may be subjected to a natural color-developing or an electrolytic coloring.

Method (B) has the following optional features:
(a) the film facing material is transparent;
(b) the film facing material is a color clear colored to such an extent that a light transmitting through the film facing material can identify a hue of a colored aluminum;
(c) the film facing material is formed by laminating a cementing material layer (a), a substrate base material layer (b), a colored film (c) and a clear layer (d);
(d) the film facing material is formed by laminating a cementing material layer (a), a substrate base material layer (b) and a clear layer (d);
(e) the film facing material is a transfer film;
(f) the clear layer (d) is formed by a curable clear coating composition;
(g) the film facing material is applied onto the surface of an aluminum material formed by laminating an electrodeposition coating film onto an oxidized aluminum material, an aluminum material formed by laminating a water based chipping primer coating film onto an electrodeposition coating film, or an aluminum material formed by laminating an electrodeposition coating film, a water based chipping primer coating film and a heat-curable water based intercoat coating film.

## Claims

1. An automobile body-coating method for coating an outer plate area and/or an inner plate area of an automobile body comprising an oxidized aluminum material or an oxidized aluminum material and steel material-combined metal material, which method comprises (1) electrodeposition coating a heat-curable electrodeposition coating composition onto the surface of the oxidized aluminum material in the outer plate area and/or the inner plate area of the automobile body to form an electrodeposition coating film followed by heat curing, optionally the steel material being subjected to a surface treatment followed by being subjected to an electrodeposition coating, or (2) coating a heat-curable water based intercoat coating composition or a heat-curable intercoat powder coating composition onto the outer plate area and/or the inner plate area of the automobile body to form a water based intercoat coating film or an intercoat powder coating film respectively, followed by coating a curable topcoat coating composition to form a curable topcoat coating film, and heat curing both coating films independently from each other or simultaneously, optionally the steel material being subjected to an electrodeposition coating.

2. An automobile body-coating method as claimed in claim 1 wherein the heat-curable topcoat coating composition is at least one coating composition selected from the group consisting of a heat-curable water based coating composition, heat-curable organic solvent based coating composition, heat-curable powder coating composition and heat-curable powder water dispersion based coating composition.

3. An automobile body-coating method as claimed in claim 1 or claim 2, wherein the aluminum material has a degree of surface roughness of 0.2 µm or less in terms of Ra.

4. An automobile body-coating method as claimed in any preceding claim wherein the oxidizing treatment is a chemical oxidizing treatment.

5. An automobile body-coating method as claimed in claim 1, 2 or 3, wherein the oxidizing treatment is an anodizing treatment.

6. An automobile body-coating method as claimed in any of claims 1-4, wherein the heat-curable electrodeposition coating film is formed by a cationic heat-curable electrodeposition coating composition.

7. An automobile body-coating method as claimed in any of claims 1-3 and 5, wherein the heat-curable electrodeposition coating film is formed by an anionic heat-curable electrodeposition coating composition.

8. An automobile body-coating method as claimed in any preceding claim, wherein the aluminum material to be subject to the oxidizing treatment is a JIS A-6000 series aluminum alloy containing magnesium and silica.

9. An automobile body-coating method as claimed in any preceding claim wherein the oxidized aluminum material is colored with a natural color-developing film or an electrolytic coloring film.
